# EUROPEAN PATENT APPLICATION

(11) **EP 4 475 228 A1**
(43) Date of publication of application: **11.12.2024**
(21) Application number: 24180016.8
(22) Date of filing: 04.06.2024
(51) Int. Cl.: H01M 4/58, H01M 10/0562, H01M 10/052

(54) **ALL-SOLID SECONDARY BATTERY**

(30) Priority: 05.06.2023 KR 20230072378; 28.08.2023 KR 20230113180; 26.02.2024 KR 20240027556
(71) Applicant: Samsung SDI Co., Ltd., Yongin-si, Gyeonggi-do 17084 (KR)
(72) Inventor: SON, Inhyuk, 17084 Yongin-si (KR); PARK, Kyusung, 17084 Yongin-si (KR); JO, Sungnim, 17084 Yongin-si (KR); SHIM, Kyueun, 17084 Yongin-si (KR); PARK, Taehyun, 17084 Yongin-si (KR); LEE, Jieun, 17084 Yongin-si (KR); PARK, Jinhwan, 17084 Yongin-si (KR)
(74) Representative: Marks & Clerk LLP

(57) **Abstract**

Provided is an all-solid secondary battery including a cathode layer, an anode layer, and a solid electrolyte layer disposed between the cathode layer and the anode layer, wherein the cathode layer includes a cathode current collector and a cathode active material layer disposed on one side or two sides of the cathode current collector, the cathode active material layer includes a lithium-containing sulfide-based cathode active material, the lithium-containing sulfide-based cathode active material includes Li₂S, a Li₂S-containing composite, or a combination thereof, the all-solid secondary battery includes a first inactive member disposed on one side of the cathode layer, the anode layer includes an anode current collector and a first anode active material layer disposed on one side of the anode current collector.

## Description

### BACKGROUND

### 1. Field

One or more embodiments relate to an all-solid secondary battery.

### 2. Description of the Related Art

Recently, with the rapid spread of electronic devices using batteries, such as mobile phones, laptop computers, and electric vehicles, the demand for secondary batteries with high energy density and high capacity has been rapidly increased. In some embodiments, research and development for improving the performance of lithium secondary batteries has been actively conducted. A lithium secondary battery is a battery including an electrolyte, and a cathode and an anode, each including an active material capable of intercalating and deintercalating lithium ions. Lithium secondary batteries produce electrical energy through oxidation and reduction reactions if lithium ions are intercalated/deintercalated into/from a cathode and anode.

Recently, due to the demands of industry, batteries with high energy density and safety have been actively developed. For example, lithium batteries are being commercialized not only in the fields of information-related devices and communication devices but also in the field of vehicles. In the field of vehicles, the vehicles are related to life, and thus safety is especially important.

Lithium batteries use an electrolyte including a flammable organic solvent as an electrolyte, and thus short circuit occurs, resulting in a possibility of overheating and fire.

All-solid batteries using a solid electrolyte instead of an electrolyte have been proposed.

All-solid batteries do not use a flammable organic solvent, and thus even if a short circuit occurs, a possibility of fire or explosion may be considerably reduced. In such all-solid batteries, safety may be considerably increased as compared with lithium batteries using an electrolyte.

### SUMMARY

A secondary battery uses a sulfur-based material (for example, S) as a cathode active material to increase capacity. During a charging/discharging process of a secondary battery, polysulfide is generated from a sulfur-based material, and the generated polysulfide moves to an anode and reacts with the anode. Due to such a side reaction, the lifespan characteristics of a secondary battery are degraded. There is a need for a secondary battery capable of suppressing a side reaction between polysulfide and a lithium metal.

In a secondary battery including a sulfur-based material (for example, S), a volume of the sulfur-based material may be increased during initial discharging so that the volume may be decreased again during a charging process, and a transfer path of ions and/or electrons in an electrode may be disconnected in a process in which the volume of the sulfur-based material is increased. Such disconnection of a transfer path of ions and/or electrons causes deterioration of a secondary battery. There is a need for a secondary battery capable of suppressing such disconnection of a transfer path of ions and/or electrons.

Defects occur in a solid electrolyte layer during a manufacturing process and/or a charging/discharging process of a secondary battery, and due to such defects, cracks occur and grow in the solid electrolyte layer. As lithium grows through such cracks, a short circuit occurs. There is a need for a secondary battery capable of suppressing the occurrence of such defects during a manufacturing process and/or a charging/discharging process of a secondary battery.

One or more embodiments include a secondary battery with a new structure which prevents a side reaction between an electrolyte layer and a lithium metal during charging/discharging, suppresses the discontinuation of a transfer path of ions and/or electrons, prevents a side reaction caused by polysulfide during charging/discharging, and suppresses defects in a secondary battery during manufacturing and/or charging/discharging.

Additional aspects will be set forth in part in the description which follows and, in part, will be apparent from the description, or may be learned by practice of the presented embodiments of the disclosure.

According to one or more embodiments, an all-solid secondary battery includes a cathode layer, an anode layer, a solid electrolyte layer disposed between the cathode layer and the anode layer, and a first inactive member disposed on one side of the cathode layer, wherein the cathode layer includes a cathode current collector and a cathode active material layer disposed on one side or two sides of the cathode current collector, the cathode active material layer includes a lithium-containing sulfide-based cathode active material, the lithium-containing sulfide-based cathode active material includes Li₂S, a Li₂S-containing composite, or a combination thereof, the anode layer includes an anode current collector and a first anode active material layer disposed on one side of the anode current collector, a ratio (B/A) of an initial charge capacity (B) of the first anode active material layer to an initial charge capacity (A) of the cathode active material layer is in a range of about 0.005 to about 0.45, the initial charge capacity of the cathode active material layer is determined by charging from a 1^{st} open circuit voltage up to a maximum charging voltage for Li/Li⁺, and the initial charge capacity of the anode active material layer is determined by charging from a 2^{nd} open circuit voltage up to a voltage of about 0.01 V for Li/Li⁺.

According to one or more embodiments, an all-solid secondary battery includes a cathode layer, an anode layer, and a solid electrolyte layer disposed between the cathode layer and the anode layer, wherein the cathode layer includes a cathode current collector and a cathode active material layer disposed on one side or two sides of the cathode current collector, and the anode layer includes an anode current collector and a first anode active material layer disposed on one side of the anode current collector, wherein the cathode active material layer includes a lithium-containing sulfide-based cathode active material, the lithium-containing sulfide-based cathode active material includes a Li₂S-containing composite, and the Li₂S-containing composite includes a composite of Li₂S and a lithium salt, a composite of Li₂S, a lithium salt, and a conductive material, a composite of Li₂S and a metal halide, a composite of Li₂S, a metal halide, and a conductive material, a composite of Li₂S, a lithium salt, and a metal halide, a composite of Li₂S, a lithium salt, a metal halide, and a conductive material, or a combination thereof, and.

An all-solid secondary battery includes a cathode layer, an anode layer, a solid electrolyte layer disposed between the cathode layer and the anode layer, and a first inactive member disposed on one side of the cathode layer, wherein the cathode layer includes a cathode current collector and a cathode active material layer disposed on one side or two sides of the cathode current collector, the cathode active material layer includes a lithium-containing sulfide-based cathode active material, the lithium-containing sulfide-based cathode active material includes a Li₂S-containing composite, and the anode layer includes an anode current collector and a first anode active material layer disposed on one side of the anode current collector.

At least some of the above and other features of the invention are set out in the claims.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a cross-sectional view of an all-solid secondary battery according to embodiments;
FIG. 2 is a cross-sectional view of an all-solid secondary battery according to embodiments;
FIG. 3 is a cross-sectional view of a bi-cell all-solid secondary battery according to embodiments;
FIG. 4 is a schematic view of a cathode layer of an all-solid secondary battery according to embodiments;
FIG. 5 is a schematic view partially illustrating the inside of an all-solid secondary battery according to embodiments;
FIG. 6 is a cross-sectional view of an all-solid secondary battery according to embodiments;
FIG. 7 is a cross-sectional view of an all-solid secondary battery according to embodiments;
FIG. 8 is a cross-sectional view of a bi-cell all-solid secondary battery according to embodiments; and
FIG. 9 is a cross-sectional view of a stacked stack of a bi-cell all-solid secondary battery according to embodiments.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. In some embodiments, the embodiments are merely described below, by referring to the figures, to explain aspects of the present description. As used herein, the term "and/or" includes any and all combinations of one or more of the associated listed items. Expressions such as "at least one of," if preceding a list of elements, modify the entire list of elements and do not modify the individual elements of the list.

Various embodiments are illustrated in the accompanying drawings. The present inventive concept may, however, be embodied in different forms and should not be construed as limited to the embodiments set forth herein. Rather, these embodiments are provided so that the present disclosure will be thorough and complete, and will fully convey the scope of the present inventive concept to those skilled in the art. Like reference numerals designate like elements.

If it is described that an element is "on" another element, it will be understood that the element may be disposed directly on another element or still another element may be interposed therebetween. In other embodiments, if it is described that an element is "directly on" another element, still another element is not interposed therebetween.

It will be understood that, although the terms "first," "second," and "third" may be used herein to describe various elements, components, regions, layers, and/or sections, these elements, components, regions, layers, and/or sections should not be limited by these terms. These terms are only used to distinguish one element, component, region, layer, or section from another region, layer, or section. Thus, a first element, component, region, layer, or section described below may be termed a second element, component, region, layer, or section without departing from the teachings of the present specification.

The term used herein is intended to describe only a specific embodiment and is not intended to limit the present inventive concept. As used herein, the singular forms "a," "an," and "the" are intended to include the plural forms, including "at least one," unless the content clearly indicates otherwise. "At least one" should not be construed as being limited to the singular. As used herein, the term "and/or" includes any and all combinations of one or more of the associated listed items. The terms "includes," "including," "comprises," and/or "comprising," when used in the detailed description, specify a presence of stated features, regions, integers, steps, operations, elements, and/or components, but do not preclude the presence or addition of one or more other features, regions, integers, steps, operations, elements, components, and/or groups thereof.

Spatially relative terms such as "beneath," "below," "lower," "above," and "upper" may be used herein to easily describe one element or feature's relationship to another element or feature. It will be understood that the spatially relative terms are intended to encompass different orientations of a device in use or operation in addition to the orientation illustrated in the drawings. For example, if a device in the drawings is turned over, elements described as "below" or "beneath" other elements or features would then be "above" or "over" the other elements or features. Thus, the example term "below" may encompass both orientations of above and below. The device may be otherwise oriented (rotated 90 degrees or at other orientations), and the spatially relative terms used herein may be interpreted accordingly.

Unless otherwise defined, all terms (including technical and scientific terms) used herein have the same meaning as commonly understood by one of ordinary skill in the art to which the present disclosure belongs. In other embodiments, it will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Embodiments are described herein with reference to cross-sectional views which are schematic diagrams of embodiments. As such, variations from the shapes of the illustrations as a result, for example, of manufacturing techniques and/or tolerances, are to be expected. Thus, the embodiments described herein should not be construed as limited to the particular shapes regions of illustrated herein but may include deviations in shapes that result, for example, from manufacturing. For example, regions illustrated or described as being flat may be typically rough and/or have nonlinear features. Moreover, sharp-drawn angles may be round. Thus, regions illustrated in the drawings are schematic in nature and their shapes are not intended to illustrate the actual shape of a region and are not intended to limit the scope of the claims.

"Group" refers to a Group of the periodic table of the elements according to the International Union of Pure and Applied Chemistry ("IUPAC") Groups 1-18 group classification system.

Unless otherwise defined herein, a particle diameter may be an average particle diameter. For example, a particle diameter refers to an average particle diameter (D50) which refers to a diameter of particles with a cumulative volume of 50 vol% in a particle size distribution. The average particle diameter (D50) may be measured through methods well known to those skilled in the art, for example, by using a particle size analyzer (PSA), a transmission electron microscope (TEM) image, or a scanning electron microscope (SEM) image. Through other methods, measurement may be performed by using a measuring device using dynamic light-scattering, data analysis is performed to count the number of particles for each particle size range, and then a value of the average particle diameter (D50) may be easily obtained therefrom through calculation. In other embodiments, the average particle diameter (D50) may be measured by using a laser diffraction method. During measurement through laser diffraction, more specifically, particles to be measured may be dispersed in a dispersion medium to then be introduced into a commercially available laser diffraction particle diameter measuring device (for example, Microtrac MT 3000), 28 kHz ultrasonic waves may be irradiated thereon at an output power of about 60 W, and then the average particle diameter (D50) based on 50% of a particle diameter distribution may calculated in the measuring device.

As used herein, the term "particle diameter" refers to an average diameter if particles are spherical and refers to an average major axis length if particles are non-spherical. An "average particle diameter" refers to, for example, D50, which is a median particle diameter.

D50 is a particle size corresponding to a 50% cumulative volume if a particle size distribution measured through a laser diffraction method is calculated from particles having a smaller particle size.

D90 is a particle size corresponding to a 90% cumulative volume if a particle size distribution measured through a laser diffraction method is calculated from particles having a smaller particle size.

D10 is a particle size corresponding to a 10% cumulative volume if a particle size distribution measured through a laser diffraction method is calculated from particles having a smaller particle size.

The term "metal" as used herein includes all of metals and metalloids such as silicon and germanium in an elemental or ionic state.

The term "alloy" as used herein refers to a mixture of two or more metals.

The term "electrode active material" as used herein refers to an electrode material that may undergo lithiation and delithiation.

The term "cathode active material" as used herein refers to a cathode material that may undergo lithiation and delithiation.

The term "anode active material" as used herein refers to an anode material that may undergo lithiation and delithiation.

The terms "lithiate" and "lithiating" as used herein refer to a process of adding lithium to an electrode active material.

The terms "delithiate" and "delithiating" as used herein refer to a process of removing lithium from an electrode active material.

The terms "charge" and "charging" as used herein refer to a process of providing electrochemical energy to a battery.

The terms "discharge" and "discharging" as used herein refer to a process of removing electrochemical energy from a battery.

The terms "positive electrode" and "cathode" as used herein refer to an electrode at which electrochemical reduction and lithiation occur during a discharging process.

The terms "negative electrode" and "anode" as used herein refer to an electrode at which electrochemical oxidation and delithiation occur during a discharging process.

While specific embodiments have been described, alternatives, modifications, variations, improvements, and substantial equivalents that are or may be presently unforeseen may arise to applicants or others skilled in the art. In some embodiments, the appended claims as filed and as they may be amended are intended to embrace all such alternatives, modifications, variations, improvements, and substantial equivalents.

Hereinafter, an all-solid secondary battery according to embodiments will be described in more detail.

### [All-solid secondary battery]

An all-solid secondary battery according to embodiments may include a cathode layer, an anode layer, a solid electrolyte layer disposed between the cathode layer and the anode layer, and a first inactive member disposed on one side of the cathode layer. The cathode layer may include a cathode current collector and a cathode active material layer disposed on one side or two sides of the cathode current collector. The cathode active material layer may include a lithium-containing sulfide-based cathode active material. The lithium-containing sulfide-based cathode active material may include Li₂S, a Li₂S-containing composite, or a combination thereof. The anode layer may include an anode current collector and a first anode active material layer disposed on one side of the anode current collector. A ratio (B/A) of an initial charge capacity (B) of the first anode active material layer to initial charge capacity (A) of the cathode active material layer may be in a range of about 0.005 to about 0.45. The initial charge capacity of the cathode active material layer may be determined by charging from a 1^{st} open circuit voltage (OCV) up to a maximum charging voltage for Li/Li⁺ (e.g., a maximum charging voltage vs. Li/Li⁺). The initial charge capacity of the anode active material layer may be determined by charging from a 2^{nd} OCV up to a voltage of about 0.01 V for Li/Li⁺.

The all-solid secondary battery may include the lithium-containing sulfide-based cathode active material as a lithium source instead of a lithium metal. In some embodiments, a lithium source such as a lithium metal may be omitted from the anode layer. A volume of the anode layer may be reduced, thereby increasing an energy density of the all-solid secondary battery.

The all-solid secondary battery may include the lithium-containing sulfide-based cathode active material as a cathode active material. In some embodiments, the disconnection of a transfer path of ions and/or electrons due to an increase in volume of a lithium-free sulfide-based cathode active material, for example, sulfur (S), during initial discharging, may be prevented. The disconnection of the transfer path of ions and/or electrons may be prevented, thereby improving the cycle characteristics of the all-solid secondary battery.

The all-solid secondary battery may include the first anode active material layer having the initial charge capacity in a range of about 0.005 to about 0.45 with respect to the initial charge capacity of the cathode active material layer. The first anode active material layer may have small initial charge capacity in such a range, and thus the anode layer may effectively compensate for a change in volume of the cathode layer during charging/discharging. In some embodiments, a change in overall volume of the all-solid secondary battery may be suppressed during charging/discharging. Deterioration due to occurrence of cracks or the like caused by a rapid change in volume during charging/discharging of the all-solid secondary battery may be prevented, thereby preventing a short circuit of the all-solid secondary battery and improving cycle characteristics.

The all-solid secondary battery may include the solid electrolyte layer, and thus polysulfide generated in the lithium-containing sulfide-based cathode active material during charging/discharging may be blocked from moving to the anode layer. In some embodiments, a side reaction between the polysulfide and the anode active material may be suppressed.

A first inactive member may be disposed on one side of the cathode layer, thereby suppressing cracks of the solid electrolyte layer which occur during pressing and/or charging/discharging of the all-solid secondary battery. In some embodiments, cracks of the solid electrolyte layer may be suppressed during manufacturing and/or charging/discharging of the all-solid secondary battery, thereby suppressing a short circuit of the all-solid secondary battery. In some embodiments, a short circuit of the all-solid secondary battery may be prevented, and the lifespan characteristics thereof are improved.

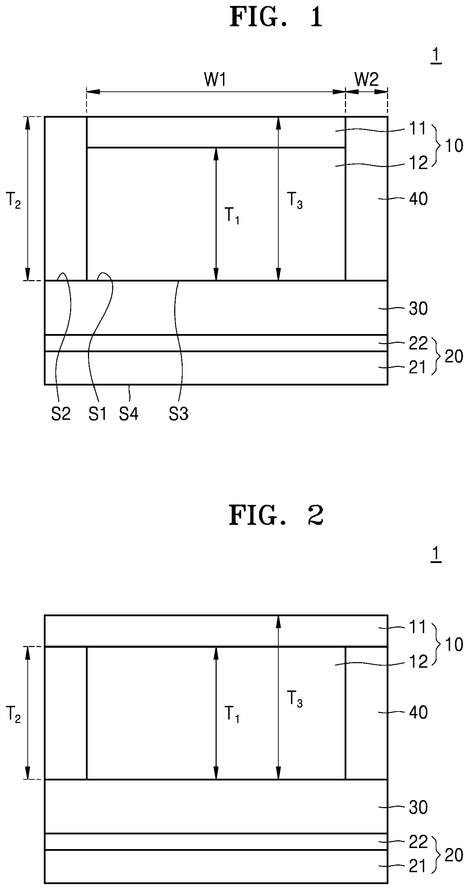

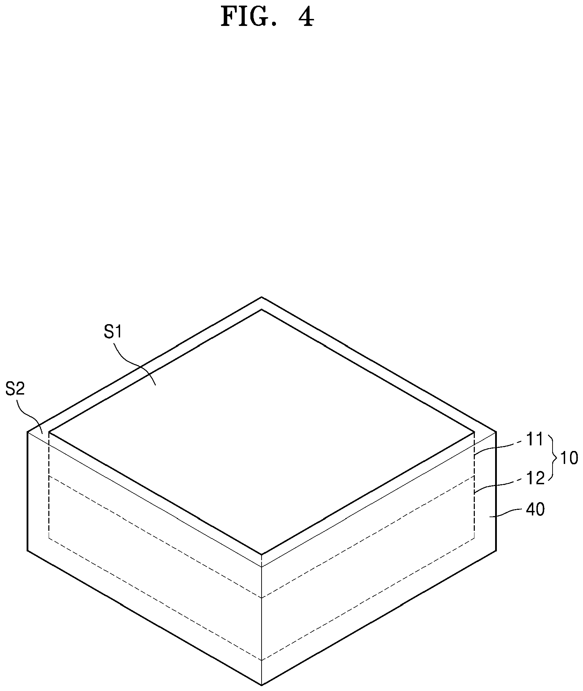

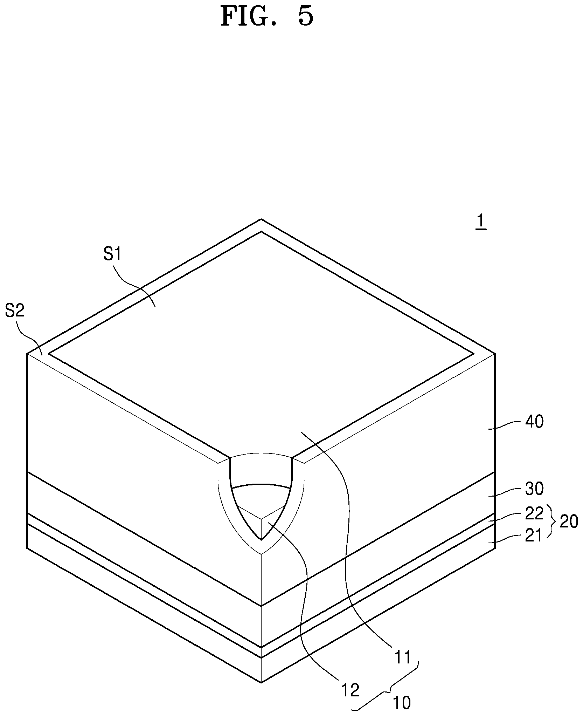

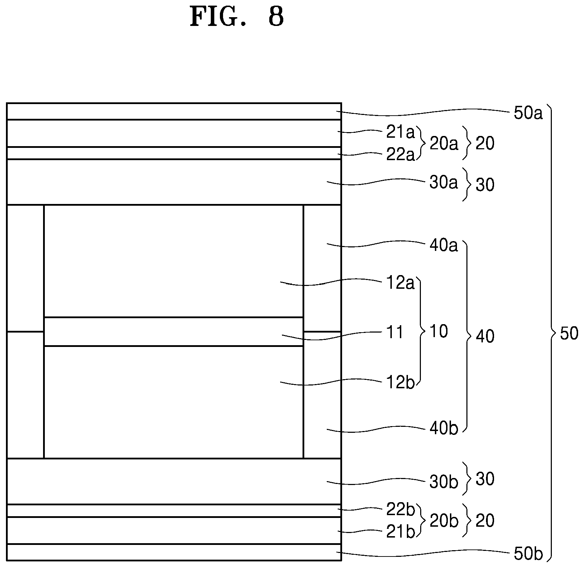

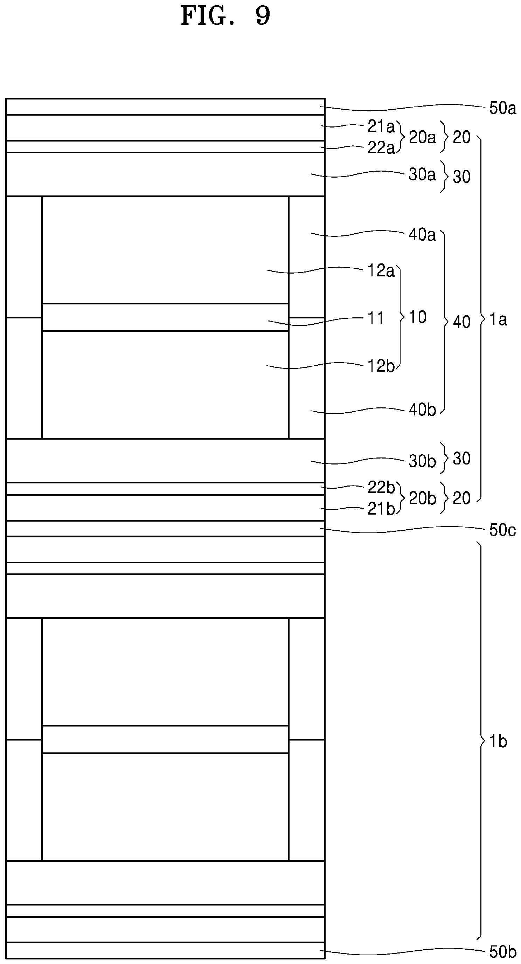

Referring to FIGS. 1 to 9, an all-solid secondary battery 1 may include a cathode layer 10, an anode layer 20, and a solid electrolyte layer 30 disposed between the cathode layer 10 and the anode layer 20. The cathode layer 10 may include a cathode current collector 11 and a cathode active material layer 12 disposed on one side or two sides of the cathode current collector 11. The cathode active material layer 12 may include a sulfide-based cathode active material. The sulfide-based cathode active material may include Li₂S, a Li₂S-containing composite, or a combination thereof. The all-solid secondary battery 1 may include a first inactive member 40 disposed on one side of the cathode layer 10. The anode layer 20 may include an anode current collector 21 and a first anode active material layer 22 disposed on one side of the anode current collector 21. A ratio (B/A) of an initial charge capacity (B) of the first anode active material layer 22 to initial charge capacity (A) of the cathode active material layer 12 may be in a range of about 0.005 to about 0.45. The initial charge capacity of the cathode active material layer 12 may be determined by charging from a 1^{st} OCV up to a maximum charging voltage for Li/Li⁺. The initial charge capacity of the anode active material layer 22 may be determined by charging from a 2^{nd} OCV up to a voltage of about 0.01 V for Li/Li⁺. The ratio (B/A) of the initial charge capacity (B) of the first anode active material layer 22 to the initial charge capacity (A) of the cathode active material layer 12 may be, for example, in a range of about 0.01 to about 0.4, about 0.01 to about 0.3, or about 0.01 to about 0.1.

### [Cathode layer]

### [Cathode layer: cathode active material]

Referring to FIGS. 1 to 9, the cathode active material layer 12 may include, for example, a cathode active material and a solid electrolyte. The solid electrolyte included in the cathode active material layer 12 may be similar to or different from a solid electrolyte included in the solid electrolyte layer 30. The solid electrolyte may be defined as in a section of the solid electrolyte layer 30.

The cathode active material may include a lithium-containing sulfide-based cathode active material. The lithium-containing sulfide-based cathode material may be, for example, an electrode material in which lithium is added to a sulfur-based cathode active material. A sulfur-based cathode active material may include, for example, a sulfur-based material, a sulfur-based material-containing composite, or a combination thereof. The sulfur-based material may be, for example, inorganic sulfur, Li₂Sₙ, wherein n>1, a disulfide compound, an organic sulfur compound, a carbon-sulfur polymer, or a combination thereof. The sulfur-based material-containing composite may be a composite including inorganic sulfur, Li₂Sₙ, wherein n>1, a disulfide compound, an organic sulfur compound, a carbon-sulfur polymer, or a combination thereof. The sulfur-based material-containing composite may include, for example, a composite of a sulfur-based material and carbon, a composite of a sulfur-based material, carbon, and a solid electrolyte, a composite of a sulfur-based material, carbon, and a lithium salt, a composite of a sulfur-based material and a lithium salt, a composite of a sulfur-based material and a solid electrolyte, a composite of a sulfur-based material and a metal carbide, a composite of a sulfur-based material, carbon, and a metal carbide, a composite of a sulfur-based material and a metal nitride, a composite of a sulfur-based material, carbon, and a metal nitride, or a combination thereof. A lithium-containing sulfide-based cathode active material may provide a higher discharge capacity per unit weight than an oxide-based cathode active material, and thus an energy density per unit weight of an all-solid secondary battery including the lithium-containing sulfide-based cathode active material may be increased.

The lithium-containing sulfide-based cathode active material may include, for example, Li₂S, a Li₂S-containing composite, or a combination thereof. The lithium-containing sulfide-based cathode active material may include Li₂S, a Li₂S-containing composite, or a combination thereof which has high capacity, and thus the use of a lithium metal may be omitted if an all-solid secondary battery is manufactured. A lithium metal may have high reactivity and high ductility, and thus the lithium metal may reduce mass productivity during manufacturing of a battery. In some embodiments, the mass productivity of an all-solid secondary battery may be improved. A lithium metal may be omitted from an anode layer, and thus a volume of the anode layer may be decreased, thereby improving an energy density per unit volume of an all-solid secondary battery and constituting an all-solid secondary battery having a simpler structure.

The lithium-containing sulfide-based cathode active material (for example, Li₂S) may undergo delithiation, for example, during initial charging so that a volume thereof may be decreased, and the lithium-containing sulfide-based cathode active material may undergo lithiation again during subsequent discharging so that the volume thereof may be increased. In some embodiments, the volume of the lithium-containing sulfide-based cathode active material may change in a state in which a transfer path of ions and/or electrons due to a conductive material or the like disposed around the lithium-containing sulfide-based cathode active material is maintained, and thus a possibility of the disconnection of the transfer path of ions and/or electrons may be low. In other embodiments, the sulfur-based cathode active material (for example, S) may undergo lithiation, for example, during initial discharging so that a volume thereof may be increased, and the sulfur-based cathode active material may undergo delithiation again during subsequent charging so that the volume thereof may be decreased. In some embodiments, an initial transfer path of ions and/or electrons due to a conductive material or the like disposed around the sulfur-based cathode active material may be collapsed due to an initial volume increase of the sulfur-based cathode active material, and thus a probability of the disconnection of the transfer path of ions and/or electrons may be high.

A particle diameter (e.g. an average particle diameter, such as D50) of the lithium-containing sulfide-based cathode active material may be, for example, in a range of about 1 nm to about 50 µm, about 10 nm to about 50 µm, about 50 nm to about 40 µm, about 100 nm to about 30 µm, about 500 nm to about 30 µm, or about 1 µm to about 20 µm. The lithium-containing sulfide-based cathode active material may have a particle diameter within such a range, and thus the cycle characteristics of an all-solid secondary battery including the lithium sulfide-based cathode active material may be further improved. A Li₂S-containing composite may be, for example, a composite of Li₂S and a conductive material. The conductive material may be, for example, an ion-conductive material, an electron-conductive material, or a combination thereof.

The electron-conductive material may have an electronic conductivity of, for example, 1.0×10³ S/m, 1.0×10⁴ S/m, or 1.0×10⁵ S/m or more. The electron-conductive material may be, for example, in the form of a particulate electron-conductive material, a plate-like electron-conductive material, a rod-like electron-conductive material, or a combination thereof but is not necessarily limited thereto. The electron-conductive material may include, for example, carbon, a metal powder, a metal compound, or the like. If carbon is included as the electron-conductive material, carbon may have high electronic conductivity and may be light, and thus an all-solid secondary battery having a high energy density per unit mass may be implemented. The electron-conductive material may have pores. The electron-conductive material may have pores, and thus Li₂S may be included in the pores, thereby increasing a contact area between Li₂S and the electron-conductive material and increasing a specific surface area of Li₂S. A pore volume may be in a range of, for example, about 0.1 cc/g to about 20.0 cc/g, about 0.5 cc/g to about 10 cc/g, or about 0.5 cc/g to about 5 cc/g. An average pore diameter may be in a range of, for example, about 1 nm to about 100 nm, about 1 nm to about 50 nm, or about 1 nm to about 20 nm. A Brunauer, Emmett, and Teller (BET) specific surface area of the electron-conductive material having pores may be in a range of about 200 m²/g to about 4,500 m²/g if the average pore diameter is 15 nm or less and may be in a range of about 100 m²/g to about 2,500 m²/g if the average pore diameter is greater than about 15 nm. A BET specific surface area, a pore diameter, a pore volume, and an average pore diameter may be obtained using, for example, a nitrogen adsorption method such as ASTM D6556, ASTM D4567, and/or ISO 9277:2022.

The ion-conductive material may have an ionic conductivity of, for example, 1.0×10⁻⁵ S/m, 1.0×10⁻⁴ S/m, or 1.0×10⁻³ S/m or more. The ion-conductive material may have pores. The ion-conductive material may have pores, and thus Li₂S may be included in the pores, thereby increasing a contact area between Li₂S and the ion-conductive material and increasing a specific surface area of Li₂S. The ion-conductive material may be, for example, in the form of a particulate ion-conductive material, a plate-like ion-conductive material, a rod-like ion-conductive material, or a combination thereof but is not necessarily limited thereto. The ion-conductive material may be, for example, a sulfide-based solid electrolyte or an oxide-based solid electrolyte. If the sulfide-based solid electrolyte is included as the ion-conductive material, the sulfide-based solid electrolyte may have high ionic conductivity and may be shaped into various forms, thereby implementing an all-solid secondary battery having large capacity.

The Li₂S-containing composite may include, for example, a composite of Li₂S and a conductive material, a composite of Li₂S, a solid electrolyte, and a conductive material, a composite of Li₂S and a solid electrolyte, a composite of Li₂S, a lithium salt, and a conductive material, a composite of Li₂S and a lithium salt, a composite of Li₂S and a metal carbide, a composite of Li₂S, a metal carbide, and a conductive material, a composite of Li₂S and a metal nitride, a composite of Li₂S, a metal nitride, and a conductive material, or a combination thereof. The Li₂S-containing composite may be distinguished from a simple mixture of Li₂S, a conductive material, a solid electrolyte, a lithium salt, a metal carbide, and a metal nitride. The simple mixture of Li₂S, the conductive material, the solid electrolyte, the lithium salt, the metal carbide, and the metal nitride may provide high interfacial resistance because a dense interface between Li₂S and these other components may not be maintained, and thus the lifespan characteristics of an all-solid secondary battery may deteriorate.

The Li₂S-containing composite may include, for example, a composite of Li₂S and a lithium salt, a composite of Li₂S, a lithium salt, and a conductive material, a composite of Li₂S and a metal halide, a composite of Li₂S, a metal halide, and a conductive material, a composite of Li₂S, a lithium salt, and a metal halide, a composite of Li₂S, a lithium salt, a metal halide, and a conductive material, or a combination thereof. The Li₂S-containing composite may be distinguished from a simple mixture of Li₂S, a lithium salt, a metal halide, and a conductive material. The simple mixture of Li₂S, the metal halide, the lithium salt, and the conductive material may provide high interfacial resistance because a dense interface between Li₂S and these other components may not be maintained, and thus the lifespan characteristics of an all-solid secondary battery may deteriorate. The Li₂S-containing composite may include Li₂S. Li₂S may have a high theoretical capacity, and thus a secondary battery having a high energy density may be provided. However, in order to overcome the shortcomings such as low ionic conductivity and/or electronic conductivity, Li₂S may form a composite with a lithium salt, a metal halide, a conductive material, or the like. A content of Li₂S in the Li₂S-containing composite may be, for example, in a range of about 10 wt% to about 80 wt%, about 20 wt% to about 80 wt%, about 30 wt% to about 80 wt%, or about 40 wt% to about 80 wt% with respect to the total weight of the Li₂S-containing composite. If the content of Li₂S in the Li₂S-containing composite excessively increases, it may not be easy to improve the ionic conductivity and/or electronic conductivity of the Li₂S-containing composite. If the content of Li₂S in the Li₂S-containing composite is excessively low, the energy density of an all-solid secondary battery may decrease.

The composite of Li₂S and the conductive material may include the conductive material. The conductive material may include, for example, a carbon-based material. As the carbon-based material, for example, any material may be used as long as the material may be a material including carbon atoms and may be used as a conductive material in the art. The carbon-based material may be, for example, a crystalline carbon-based material, an amorphous carbon-based material, or a combination thereof. The carbon-based material may be, for example, a sintered material of a carbon precursor. The carbon-based material may include, for example, carbon nanostructures.

The carbon nanostructures may be, for example, one-dimensional carbon nanostructures, two-dimensional carbon nanostructures, three-dimensional carbon nanostructures, or combinations thereof. The carbon nanostructures may be, for example, carbon nanotubes (CNTs), carbon nanofibers (CNFs), carbon nanobelts, carbon nanorods, graphene, or a combination thereof. The carbon-based material may be, for example, a porous carbon-based material or a non-porous carbon-based material. The porous carbon-based material may include, for example, periodic and regular two-dimensional or three-dimensional pores. The porous carbon-based material may include, for example, carbon black (CB) such as Ketjen black (KB), acetylene black (AB), Denka black, thermal black, or channel black; graphite; activated carbon; or a combination thereof. The form of the carbon-based material may be, for example, a particle form, a sheet form, a flake form, or the like, but one or more embodiments are not limited thereto. Any material may be used as long as the material may be used as a carbon-based material in the art. A method of preparing the composite of Li₂S and the carbon-based material may be a dry method, a wet method, or a combination thereof, but is not limited thereto. In the art, the method of preparing the composite of Li₂S and the carbon-based material may include, for example, milling, heat treatment, deposition, or the like, but one or more embodiments are not limited thereto. Any method may be used as long as the method may be used in the art.

The composite of Li₂S, the solid electrolyte, and the conductive material may include the conductive material and the solid electrolyte. The conductive material may include, for example, a carbon-based material. The carbon-based material may be defined as for the above-described carbon-based material used in the composite of Li₂S and the conductive-material. As the solid electrolyte, for example, any material used as an ion-conductive material in the art may be used. The solid electrolyte may be, for example, an inorganic solid electrolyte. The solid electrolyte may be, for example, a crystalline solid electrolyte, an amorphous solid electrolyte, or a combination thereof. The solid electrolyte may be, for example, a sulfide-based solid electrolyte, an oxide-based solid electrolyte, or a combination thereof. The sulfide-based solid electrolyte may include, for example, Li, S, and P and may optionally further include a halogen element. The sulfide-based solid electrolyte may be selected from sulfide-based solid electrolytes used in the solid electrolyte layer 30. The sulfide-based solid electrolyte may have, for example, an ionic conductivity of 1 ×10⁻⁵ S/m or more at room temperature. The oxide-based solid electrolyte may include, for example, Li, O, and a transition metal element and may optionally further include other elements. The oxide-based solid electrolyte may be, for example, a solid electrolyte having an ionic conductivity of 1×10⁻⁵ S/m or more at room temperature. The oxide-based solid electrolyte may be selected from oxide-based solid electrolytes used in the solid electrolyte layer 30.

The solid electrolyte may be defined as for the above-described solid electrolyte used in the composite of Li₂S, the conductive material, and the solid electrolyte.

The composite of Li₂S, the lithium salt, and the conductive material may include Li₂S, the lithium salt, and the conductive material. The conductive material may include, for example, a carbon-based material. The carbon-based material may be defined as for the above-described carbon-based material used in the composite of Li₂S and the conductive material. The lithium salt may be a compound that does not include sulfur (S). The lithium salt may be, for example, a binary compound or a ternary compound. For example, the lithium salt may be a binary compound including lithium and one type of element selected from Groups 13 to 17 of the periodic table of elements. The binary compound may include, for example, at least one selected from LiF, LiCI, LiBr, Lil, LiH, Li₂O, Li₂Se, Li₂Te, Li₃N, Li₃P, Li₃As, Li₃Sb, Li₃Al₂, and LiB₃. For example, the lithium salt may be a ternary compound including lithium and two types of elements selected from Groups 13 to 17 of the periodic table of elements. The ternary compound may include, for example, at least one selected Li₃OCl, LiPF₆, LiBF₄, LiSbF₆, LiAsF₆, LiClO₄, LiAlO₂, LiAlCl₄, LiNO₃, Li₂CO₃, LiBH₄, Li₃BO₃, Li₃PO₄, Li₄NCl, Li₅NCl₂, and Li₃BN₂. The lithium salt may include at least one lithium halide compound selected from LiF, LiCI, LiBr, and Lil. The composite of Li₂S, the lithium salt, and the conductive material may be, for example, a composite of Li₂S, a lithium halide, and a carbon-based material. The composite of Li₂S, the lithium salt, and the carbon-based material may further include the lithium halide and thus may provide further improved ionic conductivity. The composite of Li₂S, the lithium salt, and the carbon-based material may be distinguished from a simple mixture of Li₂S, a lithium salt, and a carbon-based material. The simple mixture of Li₂S, the lithium salt, and the carbon-based material may provide high interfacial resistance because a dense interface between Li₂S, the lithium salt, and the carbon-based material may not be maintained, and thus the lifespan characteristics of an all-solid secondary battery may deteriorate.

The composite of Li₂S and the lithium salt may include the lithium salt. The lithium salt may be defined as for the above-described lithium salt used in the composite of Li₂S, the lithium salt, and the conductive material.

The composite of Li₂S and the metal carbide may include the metal carbide. The metal carbide may be, for example, two-dimensional metal carbide. The two-dimensional metal carbide may be represented by, for example, Mₙ₊₁CₙTₓ, wherein M is a transition metal, T is a terminal group, T is O, OH, and/or F, n=1, 2, or 3, and x is a terminal group number. The two-dimensional metal carbide may be, for example, Ti₂CTₓ, (Ti_{0.5}, Nb_{0.5})₂CTₓ, Nb₂CTₓ, V₂CTₓ, Ti₃C₂Tₓ, (V_{0.5}, Cr_{0.5})₃C₂Tₓ, Ti₃CTₓ, Ta₄C₃Tₓ, Nb₄C₃Tₓ, or a combination thereof. A surface of the two-dimensional metal carbide may be terminated with O, OH, and/or F, where the total number of O, OH and/or F groups at the surface is the terminal group number.

The composite of Li₂S, the metal carbide, and the conductive material may include Li₂S, the metal carbide, and the conductive material. The conductive material may include, for example, a carbon-based material. The carbon-based material may be defined as for the above-described carbon-based material used in the composite of Li₂S and the conductive-material. The metal carbide may be defined as for the above-described the metal carbide used in the composite of Li₂S and the metal carbide.

The composite of Li₂S and the metal nitride may include Li₂S and the metal nitride. The metal nitride may be, for example, two-dimensional metal nitride. The two-dimensional metal nitride may be represented by, for example, Mₙ₊₁NₙTₓ, wherein M is a transition metal, T is a terminal group, T is O, OH, and/or F, n=1, 2, or 3, and x is a terminal group number. A surface of the two-dimensional metal nitride may be terminated with O, OH, and/or F, where the total number of O, OH and/or F groups at the surface is the terminal group number.

The composite of Li₂S, the metal nitride, and the conductive material may include Li₂S, the metal nitride, and the conductive material. The conductive material may include, for example, a carbon-based material. The carbon-based material may be defined as for the above-described carbon-based material used in the composite of Li₂S and the conductive-material. The metal nitride may be defined as for the above-described the metal nitride used in the composite of Li₂S and the metal nitride.

A composite of Li₂S and a lithium salt (LiₐX1_{b}) may be represented, for example, by Li₂S-LiₐX1_{b}, wherein 1≤a≤5, 1≤b≤5, and X1 is I, Br, Cl, F, H, O, Se, Te, N, P, As, Sb, Al, B, OCI, PF₆, BF₄, SbF₆, AsF₆, ClO₄, AlO₂, AlCl₄, NO₃, CO₃, BH₄, SO₄, BO₃, PO₄, NCI, NCl₂, BN₂, or a combination thereof.

A composite of Li₂S, a lithium salt (LiₐX1_{b}), and a conductive material (C) may be represented, for example, by Li₂S-LiₐX1_{b}-C, wherein 1≤a≤5, 1≤b≤5, and X1 is I, Br, Cl, F, H, O, Se, Te, N, P, As, Sb, Al, B, OCI, PF₆, BF₄, SbF₆, AsF₆, ClO₄, AlO₂, AlCl₄, NO₃, CO₃, BH₄, SO₄, BO₃, PO₄, NCI, NCl₂, BN₂, or a combination thereof. The conductive material may be, for example, a carbon-based material.

A composite of Li₂S and a metal halide (M_{c}X2_{d}) may be represented, for example, by Li₂S-M_{c}X2_{d}, wherein 1≤c≤5, 1≤d≤5, M is at least one metal selected from Groups 2 to 15 of the periodic table of elements, and X2 is I, Br, Cl, F, or a combination thereof. The conductive material may be, for example, a carbon-based material.

A composite of Li₂S, a metal halide (M_{c}X2_{d}), and a conductive material (C) may be represented, for example, by Li₂S-M_{c}X2_{d}-C, wherein 1≤c≤5, 1≤d≤5, M is at least one metal selected from Groups 2 to 15 of the periodic table of elements. and X2 is I, Br, Cl, F, or a combination thereof. The conductive material may be, for example, a carbon-based material.

A composite of Li₂S, a lithium salt (LiₐX1_{b}), and a metal halide (MₐX2_{b}) may be represented by Li₂S-LiₐX1_{b}-M_{c}X2_{d}, wherein 1≤a≤5, 1≤b≤5, 1≤c≤5, 1≤d≤5, X1 is I, Br, Cl, F, H, O, Se, Te, N, P, As, Sb, Al, B, OCI, PF₆, BF₄, SbF₆, AsF₆, ClO₄, AlO₂, AlCl₄, NO₃, CO₃, BH₄, SO₄, BO₃, PO₄, NCI, NCl₂, BN₂, or a combination thereof, M is at least one metal selected from Groups 2 to 15 of the periodic table of elements, and X2 is I, Br, Cl, F, or a combination thereof. The conductive material may be, for example, a carbon-based material.

A composite of Li₂S, a lithium salt (LiₐX1_{b}), a metal halide (MₐX2_{b}), and a conductive material (C) may be represented by Li₂S-LiₐX1_{b}-M_{c}X2_{d}-C, wherein 1≤a≤5, 1≤b≤5, 1≤c≤5, 1≤d≤5, X1 is I, Br, Cl, F, H, O, Se, Te, N, P, As, Sb, Al, B, OCI, PF₆, BF₄, SbF₆, AsF₆, ClO₄, AlO₂, AlCl₄, NO₃, CO₃, BH₄, SO₄, BO₃, PO₄, NCI, NCl₂, BN₂, or a combination thereof, M is at least one metal selected from Groups 2 to 15 of the periodic table of elements, and X2 is I, Br, Cl, F, or a combination thereof. The conductive material may be, for example, a carbon-based material.

In the Li₂S-containing composite, for example, 1≤a≤4, 1≤b≤4, 1≤c≤4, 1≤d≤4, 1≤a≤3, 1≤b≤3, 1≤c≤3, 1≤d≤3, or 1≤a≤2, 1≤b≤2, 1≤c≤2, 1≤d≤2.

The Li₂S-containing composite may include a metal halide, and the metal halide may include at least one metal selected from Al, Mg, Ti, Sn, As, Sb, Nb, Sc, Zr, V, W, Mn, Fe, Co, Pd, Cu, Ag, Zn, and Se. The metal halide may include such a metal, thereby further improving the cycle characteristics of an all-solid secondary battery including the Li₂S-containing composite.

The Li₂S-containing composite may include a metal halide, and for example, the metal halide may include AlF₃, AlCl₃, AlBr₃, AlI₃, MgF₂, MgCl₂, MgBr₂, MgI₂, TiF₄, TiCl₄, TiBr₄, TiI₄, SnF₄, SnCl₄, SnBr₄, SnI₄, AsF₄, AsCl₄, AsBr₄, AsI₄, SbF₄, SbCl₄, SbBr₄, SbI₄, or a combination thereof. The Li₂S-containing composite may include such a metal halide, thereby further improving the cycle characteristics of an all-solid secondary battery including the Li₂S-containing composite.

The Li₂S-containing composite may include, for example, a solid solution of Li₂S and a lithium salt, a solid solution of Li₂S and a metal halide, a solid solution of Li₂S, a lithium salt, and a metal halide, or a combination thereof. For example, the composite of Li₂S and the lithium salt (LiₐX1_{b}) and/or the composite of Li₂S, the lithium salt (LiₐX1_{b}), and the conductive material (C) may include a solid solution of Li₂S and a lithium salt. For example, the composite of Li₂S and the metal halide (M_{c}X2_{d}) and/or the composite of Li₂S, the metal halide (M_{c}X2_{d}), and the conductive material (C) may include a solid solution of Li₂S and a metal halide. For example, the composite of Li₂S, the lithium salt (LiₐX1_{b}), and the metal halide (MₐX2_{b}) and/or the composite of Li₂S, the lithium salt (LiₐX1_{b}), the metal halide (MₐX2_{b}), and the conductive material (C) may include a solid solution of Li₂S, a lithium salt, and a metal halide.

The Li₂S-containing composite may include the solid solution of Li₂S and the lithium salt, the solid solution of Li₂S and the metal halide, the solid solution of Li₂S, the lithium salt, and the metal halide, or the combination thereof, and thus the ionic conductivity of the Li₂S-containing composite may increase. For example, the solid solution of Li₂S and the lithium salt, the solid solution of Li₂S and the metal halide, the solid solution of Li₂S, the lithium salt, and the metal halide, or the combination thereof may include lithium ions, metal ions, and/or halide ions disposed inside Li₂S crystallites, and thus the ionic conductivity of the solid solution of Li₂S, the lithium salt, and the metal halide may be improved as compared with that of Li₂S. In some embodiments, the ionic conductivity of the Li₂S-containing composite may be improved, and the internal resistance of the Li₂S-containing composite may be reduced. A lithium-containing sulfide-based cathode active material may include such a Li₂S-containing composite, thereby further improving the cycle characteristics of an all-solid secondary battery including the lithium-containing sulfide-based cathode active material. For example, the high-rate characteristics of an all-solid secondary battery including such a lithium-containing sulfide-based cathode active material may be further improved.

A composite of Li₂S, a lithium salt, and a conductive material, a composite of Li₂S, a metal halide, and a conductive material, and a composite of Li₂S, a lithium salt, a metal halide, and a conductive material may include the conductive material. The conductive material may include, for example, a carbon-based material, a metal-based material, or a combination thereof.

The carbon-based material may include, for example, a fibrous carbon-based material. The metal-based material may include, for example, a fibrous metal-based material.

The composite of Li₂S, the metal halide, and the conductive material may include the fibrous carbon-based material and/or the fibrous metal-based material, thereby further improving the electronic conductivity of the composite of Li₂S, the metal halide, and the conductive material. The composite of Li₂S, the metal halide, and the conductive material may include the fibrous carbon-based material and/or the fibrous metal-based material, and thus electronic conduction may be more easily performed from a surface to the inside of the composite of Li₂S, the metal halide, and the conductive material. The internal resistance of a cathode active material layer including the composite of Li₂S, the metal halide, and the conductive material may be reduced, and the cycle characteristics of an all-solid secondary battery including the cathode active material layer may be further improved.

An aspect ratio of the fibrous carbon-based material and/or the fibrous metal-based material may be, for example, 2 or more, 3 or more, 4 or more, 5 or more, 10 or more, or 20 or more. The aspect ratio of the fibrous carbon-based material and/or the fibrous metal-based material may be, for example, in a range of about 2 to about 30, about 3 to about 30, about 4 to about 30, about 5 to about 30, about 10 to about 30, or about 20 to about 30. The aspect ratio of the fibrous carbon-based material and/or the fibrous metal-based material may be, for example, in a range of about 2 to about 30, about 2 to about 20, about 2 to about 10, about 2 to about 8, about 2 to about 5 or about 2 to about 4. The fibrous carbon-based material and/or the fibrous metal-based material may have an aspect ratio in such a range so that the overall electronic conductivity of the composite of Li₂S, the lithium salt, and the conductive material may be improved, and an imbalance of local electronic conductivity in the composite of Li₂S, the lithium salt, and the conductive material may be further alleviated.

The fibrous carbon-based material may include, for example, carbon nanostructures. The carbon nanostructures may include, for example, CNFs, CNTs, carbon nanobelts, carbon nanorods, or a combination thereof. The fibrous metal-based material may include, for example, metal nanostructures. The metal nanostructures may include, for example, metal nanofibers (MNF), metal nanotubes (MNT), metal nanobelts, metal nanorods, or a combination thereof.

The carbon nanostructure may include, for example, a primary carbon nanostructure consisting of a single carbon nanostructure, a secondary carbon nanostructure in which a plurality of primary carbon nanostructures aggregate, or a combination thereof.

A diameter of the primary carbon nanostructure may be, for example, in a range of about 1 nm to about 200 nm, about 1 nm to about 150 nm, about 1 nm to about 100 nm, about 1 nm to about 50 nm, about 1 nm to about 30 nm, or about 1 nm to about 20 nm. A length of the primary carbon nanostructure may be, for example, in a range of 10 nm to about 2 µm, about 10 nm to about 1.5 µm, about 10 nm to about 1 µm, about 10 nm to about 500 nm, about 10 nm to about 400 nm, about 10 nm to about 300 nm, about 10 nm to about 200 nm, or about 10 nm to about 100 nm. The diameter and length of the primary carbon nanostructure may be measured from a SEM or TEM image. In other embodiments, the diameter and/or length of the primary carbon nanostructure may be measured through laser diffraction.

The secondary carbon nanostructure may be, for example, a structure formed by primary carbon nanostructures being entirely or partially clustered to constitute a bundle-type or rope-type nanostructure. The secondary carbon nanostructure may include, for example, a bundle-type carbon nanostructure, a rope-type carbon nanostructure, or a combination thereof. A diameter of the secondary carbon nanostructure may be, for example, in a range of about 2 nm to about 200 nm, about 3 nm to about 150 nm, about 5 nm to about 100 nm, about 5 nm to about 50 nm, about 5 nm to about 30 nm, or about 5 nm to about 20 nm. A length of the secondary carbon nanotube structure may be, for example, in a range of about 20 nm to about 2 µm, about 30 nm to about 1.5 µm, about 50 nm to about 1 µm, about 50 nm to about 500 nm, about 50 nm to about 400 nm, about 50 nm to about 300 nm, about 50 nm to about 200 nm, or about 50 nm to 100 nm. The diameter and length of the secondary carbon nanostructure may be measured from a SEM image or an optical microscope. In other embodiments, the diameter and/or length of the secondary carbon nanostructure may be measured through laser diffraction. The secondary carbon nanostructure may be dispersed for example, in a solvent or the like to be converted into the primary carbon nanostructure and then may be used to prepare the composite of Li₂S, the metal halide, and the conductive material.

A particle size of a sulfide-based cathode active material, for example, a particle size of the Li₂S-containing composite, may be, for example, 10 µm or less, 8 µm or less, 5 µm or less, 4 µm or less, 2 µm or less, 1.5 µm or less, or 1 µm or less. The particle size of the Li₂S-containing composite may be, for example, in a range of about 1 µm to about 10 µm, about 2 µm to about 10 µm, about 2 µm to about 8 µm, or about 3 µm to about 8 µm. The particle size of the Li₂S-containing composite may be, for example, in a range of about 0.1 µm to about 10 µm, about 0.1 to about 8 µm, about 0.1 µm to about 5 µm, about 0.1 µm to about 4 µm, about 0.1 µm to about 2 µm, about 0.1 µm to about 1.5 µm, or about 0.1 µm to about 1 µm. Particles of the Li₂S-containing composite may have a particle size in such a range, a change in volume of the sulfide-based cathode active material during charging/discharging may be suppressed, and the deterioration of the sulfide-based cathode active material during charging/discharging may be more effectively suppressed. If the particle size of the Li₂S-containing composite excessively increases, a change in volume of the Li₂S-containing composite during charging/discharging may increase, which may accelerate the deterioration of the sulfide-based cathode active material. In some embodiments, the cycle characteristics of an all-solid secondary battery including such a sulfide-based cathode active material may deteriorate. The particle size of the Li₂S-containing composite may be measured by using, for example, laser diffraction, scanning electron microscopy, or the like. The size of the Li₂S-containing composite may be an arithmetic average of particle diameters of a plurality of particles measured, for example, from a SEM image by using software.

A particle size of Li₂S particles included in the Li₂S-containing composite may be, for example, 2 µm or less, 1.5 µm or less, or 1 µm or less. The particle size of the Li₂S particles may be, for example, in a range of about 0.1 µm to about 2 µm, about 0.1 µm to about 1.5 µm, or about 0.1 µm to about 1 µm. The Li₂S particles may have a particle size in such a range, and thus a change in volume of the Li₂S-containing composite during charging/discharging may be suppressed, thereby suppressing the deterioration of the sulfide-based cathode active material including the Li₂S-containing composite during charging/discharging. If the particle size of the Li₂S particles excessively increases, a change in volume of the Li₂S-containing composite during charging/discharging may increase, which may accelerate the deterioration of the sulfide-based cathode active material including the Li₂S-containing composite. In some embodiments, the cycle characteristics of a secondary battery including such a sulfide-based cathode active material may deteriorate.

The Li₂S-containing composite may have, for example, an ionic conductivity of 1×10⁻⁵ S/cm or more, 2×10⁻⁵ S/cm or more, 4×10⁻⁵ S/cm or more, 6×10⁻⁵ S/cm or more, 8×10⁻⁵ S/cm or more, or 1×10⁻⁴ S/cm or more at a temperature of about 25 °C and a pressure of about 1 atm. Ionic conductivity may be measured by using, for example, electrochemical impedance spectroscopy, a direct current (DC) polarization method, or the like. The Li₂S-containing composite may have an ionic conductivity in such a range, and thus the internal resistance of a cathode active material layer including the Li₂S-containing composite may be further reduced. The cycle characteristics of an all-solid secondary battery including the cathode active material layer may be improved.

The Li₂S-containing composite may have, for example, an electronic conductivity of 1×10⁻⁵ S/cm or more, 2×10⁻⁵ S/cm or more, 4×10⁻⁵ S/cm or more, 6×10⁻⁵ S/cm or more, 8×10⁻⁵ S/cm or more, or 1×10⁻⁴ S/cm or more at a temperature of about 25 °C and a pressure of about 1 atm. Electronic conductivity may be measured by using, for example, electrochemical impedance spectroscopy, a DC polarization method, or the like. The Li₂S-containing composite may have an electronic conductivity in such a range, and thus the internal resistance of a cathode active material layer including the Li₂S-containing composite may be further reduced. The cycle characteristics of an all-solid secondary battery including the cathode active material layer may be improved. For example, with respect to 100 parts by weight of the composite of Li₂S, the lithium salt, the metal halide, and the conductive material, Li₂S may be included in a content of about 40 parts by weight to about 80 parts by weight, a combination of the lithium salt and the metal halide may be included in a content of about 1 part by weight to about 40 parts by weight, and the conductive material may be included in a content of about 1 part by weight to about 20 parts by weight. The conductive material may be, for example, a carbon-based material. In the combination of the lithium salt and the metal halide, a molar ratio of the lithium salt to the metal halide may be, for example, in a range of about 3:1 to about 1:3, about 2:1 to about 1:2, or about 1.5:1 to about 1:1.5.

A content of Li₂S included in the composite of Li₂S, the lithium salt, the metal halide, and the conductive material may be, for example, in a range of about 10 parts by weight to about 80 parts by weight, about 20 parts by weight to about 70 parts by weight of Li₂S, about 30 parts by weight to about 60 parts by weight, or about 40 parts by weight to about 60 parts by weight with respect to 100 parts by weight of the composite of Li₂S, the lithium salt, the metal halide, and the conductive material. The conductive material may be, for example, a carbon-based material.

A content of the lithium salt and the metal halide included in the composite of Li₂S, the lithium salt, the metal halide, and the conductive material, for example, a content of the combination of the lithium salt and the metal halide, may be in a range of about 10 parts by weight to about 40 parts by weight, about 15 parts by weight to about 40 parts by weight, about 20 parts by weight to about 40 parts by weight, or about 25 parts by weight to about 35 parts by weight with respect to 100 parts by weight of the composite of Li₂S, the lithium salt, the metal halide, and the conductive material. The conductive material may be, for example, a carbon-based material. A molar ratio of the lithium salt to the metal halide may be in a range of about 3:1 to about 1:3.

A content of the conductive material included in the composite of Li₂S, the lithium salt, the metal halide, and the conductive material may be, for example, in a range of about 1 part by weight to about 20 parts by weight, about 5 parts by weight to about 20 parts by weight, or about 5 parts by weight to about 15 parts by weight with respect to 100 parts by weight of the composite of Li₂S, the lithium salt, the metal halide, and the conductive material. The conductive material may be, for example, a carbon-based material.

The composite of Li₂S, the lithium salt, the metal halide, and the conductive material may have a composition of Li₂S, the lithium salt, the metal halide, and the conductive material in such a range, and thus a sulfide-based cathode active material including the composite of Li₂S, the lithium salt, the metal halide, and the conductive material may provide better ionic conductivity and/or electronic conductivity.

A content of Li₂S included in the cathode active material layer 12 may be, for example, in a range of about 30 wt% to about 90 wt%, about 35 wt% to about 90 wt%, about 40 wt% to about 90 wt%, about 45 wt% to about 80 wt% or about 50 wt% to about 70 wt% with respect to the total weight of the cathode active material layer 12.

A content of the sulfide-based cathode active material included in the cathode active material layer 12 may be, for example, in a range of about 10 wt% to about 90 wt%, about 10 wt% to about 80 wt%, about 10 wt% to about 70 wt%, about 10 wt% to about 60 wt%, or about 10 wt% to about 50 wt% with respect to the total weight of the cathode active material layer 12. In other embodiments, the content of the sulfide-based cathode active material included in the cathode active material layer 12 may be, for example, in a range of about 10 wt% to about 90 wt%, about 20 wt% to about 90 wt%, about 30 wt% to about 90 wt%, about 40 wt% to about 90 wt%, or about 50 wt% to about 90 wt% with respect to the total weight of the cathode active material layer 12.

The cathode active material layer 12 may additionally include, for example, a sulfide-based compound that is distinguished from Li₂S. The sulfide-based compound may be, for example, a compound including a metal element and a sulfur element other than Li. The sulfide-based compound may be, for example, a compound including a sulfur element and at least one selected from metal elements having an atomic weight of 10 or more and belonging to Groups 1 to 14 of the periodic table of elements. The sulfide-based compound may be, for example, FeS₂, VS₂, NaS, MnS, FeS, NiS, CuS, or a combination thereof. The cathode active material layer 12 may additionally include the sulfide-based compound, and thus the cycle characteristics of an all-solid secondary battery may be further improved. A content of the sulfide-based compound, which is included in the cathode active material layer 12 and is distinguished from Li₂S, may be 10 wt% or less, 5 wt% or less, 3 wt% or less, or 1 wt% or less of the total weight of the cathode active material layer 12.

### [Cathode layer: solid electrolyte]

The cathode active material layer 12 may further include, for example, the solid electrolyte. The solid electrolyte may be, for example, a sulfide-based solid electrolyte. The solid electrolyte included in the cathode layer 10 may be similar to or different from the solid electrolyte included in the solid electrolyte layer 30. The solid electrolyte may be defined as in the section of the solid electrolyte layer 30.

The solid electrolyte included in the cathode active material layer 12 may have an average particle diameter (D50) that is less than an average particle diameter (D50) of the solid electrolyte included in the solid electrolyte layer 30. For example, the average particle diameter (D50) of the solid electrolyte included in the cathode active material layer 12 may be 90% or less, 80% or less, 70% or less, 60% or less, 50% or less, 40% or less, 30% or less, or 20% or less of the average particle diameter (D50) of the solid electrolyte included in the solid electrolyte layer 30. The average particle diameter (D50) may be, for example, a median particle diameter (D50). The median particle diameter (D50) may be, for example, a particle size corresponding to a 50% cumulative volume if a particle size distribution measured through a laser diffraction method is calculated from particles having a smaller particle size.

A content of the solid electrolyte included in the cathode active material layer 12 may be in a range of, for example, about 1 wt% to about 40 wt%, about 1 wt% to about 30 wt%, about 1 wt% to about 20 wt%, or about 1 wt% to about 10 wt% of the total weight of the cathode active material layer 12.

### [Cathode layer: conductive material]

The cathode active material layer 12 may further include, for example, a conductive material. The conductive material may be, for example, a carbon-based conductive material, a metal-based conductive material, or a combination thereof. The carbon-based conductive material may be, for example, graphite, CB, AB, KB, a carbon fiber, or a combination thereof but is not limited thereto. Any material used as a carbon-based conductive material in the art may be used. The metal-based conductive material may be a metal powder, a metal fiber, or a combination thereof but is not limited thereto. Any material used as a metal-based conductive material in the art may be used. A content of the conductive material included in the cathode active material layer 12 may be in a range of, for example, about 1 wt% to about 30 wt%, about 1 wt% to about 20 wt%, or about 1 wt% to about 10 wt% of the total weight of the cathode active material layer 12.

### [Cathode layer: binder]

The cathode active material layer 12 may further include, for example, a binder. The binder may be, for example, styrene butadiene rubber (SBR), polytetrafluoroethylene, polyvinylidene fluoride, polyethylene (PE), or the like but is limited thereto. Any material used as a binder in the art may be used. A content of the binder included in the cathode active material layer 12 may be, for example, about 1 wt% to about 10 wt% of the total weight of the cathode active material layer 12. The binder may be omitted.

### [Cathode layer: other additives]

In addition to the above-described cathode active material, solid electrolyte, binder, and conductive material, the cathode active material layer 12 may further include, for example, additives such as a filler, a coating agent, a dispersant, and an ion-conductive adjuvant.

As the filler, the coating agent, the dispersant, the ion-conductive adjuvant, and the like that may be included in the cathode active material layer 12, known materials generally used in an electrode of an all-solid secondary battery may be used.

### [Cathode layer: cathode current collector]

The cathode current collector 11 may be formed in the form of a plate, a foil, or the like consisting of, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof. The cathode current collector 11 may be omitted. A thickness of the cathode current collector 11 may be in a range of, for example, about 1 µm to about 100 µm, about 1 µm to about 50 µm, about 5 µm to about 25 µm, or about 10 µm to about 20 µm.

The cathode current collector 11 may include, for example, a base film and a metal layer disposed on one side or two sides of the base film. The base film may include, for example, a polymer. The polymer may be, for example, a thermoplastic polymer. The polymer may include, for example, polyethylene terephthalate (PET), PE, polypropylene (PP), polybutylene terephthalate (PBT), polyimide (PI), or a combination thereof. The base film may be, for example, an insulator. The base film may include an insulating thermoplastic polymer, and thus, if a short circuit occurs, the base film may soften or liquefy to interrupt the operation of a battery, thereby suppressing a rapid increase in current. The metal layer may include, for example, indium (In), copper (Cu), magnesium (Mg), stainless steel, titanium (Ti), iron (Fe), cobalt (Co), nickel (Ni), zinc (Zn), aluminium (Al), germanium (Ge), or an alloy thereof. The metal layer may serve as an electrochemical fuse and may be cut if an overcurrent occurs, thereby performing a short circuit prevention function. A thickness of the metal layer may be adjusted to adjust a limit current and a maximum current. The metal layer may be electrodeposited or deposited on the base film. If the thickness of the metal layer decreases, a limit current and/or a maximum current of the cathode current collector 11 may decrease, and thus the stability of a lithium battery during a short circuit may be improved. A lead tab may be added onto the metal layer for external connection. The lead tab may be welded to the metal layer or a metal layer/base film stack through ultrasonic welding, laser welding, spot welding, or the like. While the base film and/or the metal layer are melted during welding, the metal layer may be electrically connected to the lead tab. In order to more strongly weld the metal layer and the lead tab, a metal chip may be added between the metal layer and the lead tab. The metal chip may be a flake consisting of the same material as a metal of the metal layer. The metal chip may be, for example, metal foil or a metal mesh. The metal chip may be, for example, aluminium foil, copper foil, or SUS foil. The metal chip may be disposed on the metal layer and then welded to the lead tab, and thus the lead tab may be welded to a metal chip/metal layer stack or a metal chip/metal layer/base film stack. During welding, while the base film, the metal layer, and/or the metal chip are melted, the metal layer or a metal layer/metal chip stack may be electrically connected to the lead tab. A metal chip and/or a lead tab may be added onto a portion of the metal layer. A thickness of the base film may be, for example, in a range of about 1 µm to about 50 µm, about 1.5 µm to about 50 µm, about 1.5 µm to about 40 µm, or about 1 µm to about 30 µm. The base film may have a thickness in such a range, and thus a weight of an electrode assembly may be more effectively reduced. A melting point of the base film may be, for example, in a range of about 100 °C to about 300 °C, about 100 °C to about 250 °C, or about 100 °C to about 200 °C. The base film may have a melting point in such a range, and thus the base film may be melted and easily coupled to the lead tab in a process of welding the lead tab. In order to improve adhesive strength between the base film and the metal layer, surface treatment such as corona treatment may be performed on the base film. A thickness of the metal layer may be, for example, in a range of about 0.01 µm to about 3 µm, about 0.1 µm to about 3 µm, about 0.1 µm to about 2 µm, or about 0.1 µm to about 1 µm. The metal layer may have a thickness in such a range, and thus the stability of an electrode assembly may be secured while conductivity is maintained. A thickness of the metal chip may be, for example, in a range of about 2 µm to about 10 µm, about 2 µm to about 7 µm, or about 4 µm to about 6 µm. The metal chip may have a thickness in such a range, and thus the metal layer and the lead tab may be more easily connected. The cathode current collector 11 may have such a structure, and thus a weight of a cathode may be reduced, thereby improving the energy density of the cathode and a lithium battery.

### [Cathode layer: first inactive member]

Referring to FIG. 1, the cathode layer 10 may include the cathode current collector 11 and the cathode active material layer 12 disposed on one side of the cathode current collector 11. The first inactive member 40 may be disposed on one side of the cathode layer 10. The first inactive member 40 may be disposed on one side of the cathode active material layer 12 and one side of the cathode current collector 11. Referring to FIG. 2, the first inactive member 40 may be disposed on one side of the cathode active material layer 12 and may be disposed between the solid electrolyte layer 30 and the cathode current collector 11 opposite to the solid electrolyte layer 30. The first inactive member 40 may not be disposed on one side of the cathode current collector 11.

The first inactive member 40 may be provided, and thus cracks of the solid electrolyte layer 30 may be prevented during manufacturing and/or charging/discharging of the all-solid secondary battery 1, thereby improving the cycle characteristics of the all-solid secondary battery 1. In the all-solid secondary battery 1 not including the first inactive member 40, during manufacturing and/or charging/discharging of the all-solid secondary battery 1, non-uniform pressure may be applied to the solid electrolyte layer 30 in contact with the cathode layer 10, which causes cracks in the solid electrolyte layer 30 and increases a possibility that a short circuit occurs due to the growth of a lithium metal through the cracks.

In the all-solid secondary battery 1, a thickness T2 of the first inactive member 40 may be greater than or equal to a thickness T1 of the cathode active material layer 12. In the all-solid secondary battery 1, the thickness T2 of the first inactive member 40 may be substantially equal to a thickness T3 of the cathode layer 10. The thickness T2 of the first inactive member 40 may be equal to the thickness T3 of the cathode layer 10, uniform pressure may be applied to the cathode layer 10 and the solid electrolyte layer 30, and the cathode layer 10 may be in sufficiently close contact with the solid electrolyte layer 30 so that interfacial resistance between the cathode layer 10 and the solid electrolyte layer 30 may be reduced. In other embodiments, the solid electrolyte layer 30 may be sufficiently sintered during a press manufacturing process of the all-solid secondary battery 1, thereby reducing internal resistance of the solid electrolyte layer 30 and the all-solid secondary battery 1 including the same.

The first inactive member 40 may surround a side of the cathode layer 10 and may be in contact with the solid electrolyte layer 30. The first inactive member 40 may surround the side of the cathode layer 10 and may be in contact with the solid electrolyte layer 30, and thus cracks of the solid electrolyte layer 30 may be effectively suppressed from being caused in the solid electrolyte layer 30 not in contact with the cathode layer 10 due to a pressure difference during a pressing process. The first inactive member 40 may surround the side of the cathode layer 10 and may be separated from the anode layer 20, more specifically, the first anode active material layer 22. The first inactive member 40 may surround the side of the cathode layer 10, may be in contact with the solid electrolyte layer 30, and may be separated from the anode layer 20. In some embodiments, a possibility that a short circuit occurs due to physical contact between the cathode layer 10 and the first anode active material layer 22 may be suppressed, or a possibility that a short circuit occurs due to overcharging of lithium may be suppressed. For example, the first inactive member 40 may be disposed on one side of the cathode active material layer 12 and concurrently may also be disposed on one side of the cathode current collector 11, thereby more effectively suppressing a possibility that a short circuit occurs due to contact between the cathode current collector 11 and the anode layer 20.

Referring to FIGS. 1 to 5, the first inactive member 40 (40a or 40b) may extend from one side of the cathode layer 10 to an end portion of the solid electrolyte layer 30. The first inactive member 40 may extend to the end portion of the solid electrolyte layer 30, and thus cracks may be suppressed from occurring in the end portion of the solid electrolyte layer 30. The end portion of the solid electrolyte layer 30 may be an outermost portion in contact with a side of the solid electrolyte layer 30. The first inactive member 40 may extend to the outermost portion in contact with the side of the solid electrolyte layer 30. The first inactive member 40 may be separated from the anode layer 20, for example, the first anode active material layer 22. The first inactive member 40 extends to the end portion of the solid electrolyte layer 30 but is not in contact with the anode layer 20. The first inactive member 40 may fill, for example, a space extending from one side of the cathode layer 10 to the end portion of the solid electrolyte layer 30.

Referring to FIGS. 1 and 2, a width W2 of the first inactive member 40 extending from one side of the cathode layer 10 to the end portion of the solid electrolyte layer 30 may be in a range of, for example, about 1% to about 30%, about 1% to about 25%, about 1% to about 20%, about 1% to about 15%, about 1% to about 10%, or about 1% to about 5% of a width W1 between one side of the cathode layer 10 and the other side opposite to the one side. Referring to FIGS. 1 and 2, a width of the first inactive member 40 extending from one side of the cathode layer 10 to the end portion of the solid electrolyte layer 30 may be, for example, in a range of about 1% to about 30%, about 3% to about 30%, about 5% to about 30%, about 5% to about 20%, about 5% to about 15%, or about 5% to about 10% of a width between one side of the cathode layer 10 and the other side opposite to the one side. If the width W2 of the first inactive member 40 is excessively wide, an energy density of the all-solid secondary battery 1 may be reduced. If the width W2 of the first inactive member 40 may be excessively narrow, an effect of arranging the first inactive member 40 may be insignificant.

An area S1 of the cathode layer 10, such as an area S1 of the positive electrode active material layer 12 (e.g. a cross-sectional area S1 of the positive electrode layer 10, or a cross-sectional area S1 of the positive electrode active material layer 12, relative to a stacking direction or thickness direction of the all-solid secondary battery 1), may be smaller than an area S3 of the solid electrolyte layer 30 (e.g. a cross-sectional area S3 of the solid electrolyte layer 30 relative to a stacking direction or thickness direction of the all-solid secondary battery 1) in contact with the cathode layer 10 (or the positive electrode active material layer 12). The first inactive member 40 having flame retardancy may be disposed to surround the side of the cathode layer 10 (or the positive electrode active material layer 12) to compensate for an area difference between the cathode layer 10 (or the positive electrode active material layer 12) and the solid electrolyte layer 30. An area S2 of the first inactive member 40 (e.g. a cross-sectional area S2 of first inactive member 40 relative to a stacking direction or thickness direction of the all-solid secondary battery 1) having flame retardancy may compensate for a difference between the area S1 of the cathode layer 10 (or the positive electrode active material layer 12) and the area S3 of the solid electrolyte layer 30, and thus cracks of the solid electrolyte layer 30 caused by a pressure difference during a pressing process may be effectively suppressed. For example, the sum of the area S1 of the cathode layer 10 (or the positive electrode active material layer 12) and the area S2 of the first inactive member 40 may be equal to the area S3 of the solid electrolyte layer 30.

The area S1 of the cathode layer 10 (or the positive electrode active material layer 12) may be, for example, less than 100%, 99% or less, 98% or less, 97% or less, 96% or less, or 95% or less of the area S3 of the solid electrolyte layer 30. The area S1 of the cathode layer 10 (or the positive electrode active material layer 12) may be in a range of, for example, about 50% to less than about 100%, about 50% to about 99%, about 55% to about 98%, about 60% to about 97%, about 70% to about 96%, about 80% to about 95%, or about 85% to about 95% of the area S3 of the solid electrolyte layer 30.

If the area S1 of the cathode layer 10 (or the positive electrode active material layer 12) is greater than or equal to the area S3 of the solid electrolyte layer 30, a possibility that a short circuit occurs due to physical contact between the cathode layer 10 (or the positive electrode active material layer 12) and the first anode active material layer 22 may be increased, or a possibility that a short circuit occurs due to overcharging of lithium may be increased. The area S1 of the cathode layer 10 may be equal to, for example, an area of the cathode active material layer 12. The area S1 of the cathode layer 10 may be equal to, for example, an area of the cathode current collector 11.

The area S2 of the first inactive member 40 may be, for example, 50% or less, 40% or less, 30% or less, 20% or less, or 10% or less of the area S1 of the cathode layer 10 (or the positive electrode active material layer 12). The area S2 of the first inactive member 40 may be in a range of, for example, about 1% to about 50%, about 5% to about 40%, about 5% to about 30%, about 5% to about 20%, or about 5% to about 15% of the area S1 of the cathode layer 10.

The area S1 of the cathode layer 10 (or the positive electrode active material layer 12) may be smaller than an area S4 of the anode current collector 21 (e.g. a cross-sectional area S4 of the negative electrode current collector 21 relative to a stacking direction or thickness direction of the all-solid secondary battery 1). The area S1 of the cathode layer 10 (or the positive electrode active material layer 12) may be, for example, less than 100%, 99% or less, 98% or less, 97% or less, 96% or less, or 95% or less of the area S4 of the anode current collector 21. The area S1 of the cathode layer 10 (or the positive electrode active material layer 12) may be in a range of, for example, about 50% to less than about 100%, about 50% to about 99%, about 55% to about 98%, about 60% to about 97%, about 70% to about 96%, about 80% to about 95%, or about 85% to about 95% of the area S4 of the anode current collector 21. The area S4 of the anode current collector 21 may be equal to, for example, an area of the anode layer 20 (e.g. a cross-sectional area of the negative electrode layer 20 relative to a stacking direction or thickness direction of the all-solid secondary battery 1). The area S4 of the anode current collector 21 may be equal to, for example, an area of the first anode active material layer 22 (e.g. a cross-sectional area of the first negative electrode active material layer 22 relative to a stacking direction or thickness direction of the all-solid secondary battery 1).

The "equal" area, length, width, thickness, and/or shape as used herein encompass all cases of having "substantially equal" area, length, width, thickness, and/or shape except for a case in which areas, lengths, widths, thicknesses, and/or shapes are intentionally expressed as being different. The "equal" area, length, width, and/or thickness encompass a range in which an unintentional difference in area, length, width, and/or thickness between comparison objects is less than 3%, less than 1%, less than 0.5%, or less than 0.1%.

A thickness of the first inactive member 40 may be greater than, for example, a thickness of the first anode active material layer 22. The thickness of the first anode active material layer 22 may be, for example, 50% or less, 40% or less, 30% or less, 20% or less, or 10% or less of the thickness of the first inactive member 40. The thickness of the first anode active material layer 22 is in a range of, for example, about 1% to about 50%, about 1% to about 40%, about 1% to about 30%, about 1% to about 20%, or about 1% to about 10% of the thickness of the first inactive member 40.

The anode layer 20 may include the anode current collector 21 and the first anode active material layer 22 disposed on one side of the anode current collector 21. For example, the other side opposite to one side of the anode current collector 21 may be free of the first anode active material layer 22. For example, the first anode active material layer 22 may be disposed on only one side of the anode current collector 21, and the first anode active material layer 22 is not disposed on the other side.

The first inactive member 40 may be a gasket. The gasket may be used as the first inactive member 40, thereby effectively suppressing cracks of the solid electrolyte layer 30 caused due to a pressure difference during a pressing process.

The first inactive member 40 may have, for example, a single layer structure. In other embodiments, although not shown in the drawings, the first inactive member 40 may have a multi-layer structure. In the first inactive member 40 having the multi-layer structure, respective layers may have different compositions. The first inactive member 40 having the multi-layer structure may have, for example, a two-layer structure, a three-layer structure, a four-layer structure, or a five-layer structure. The first inactive member 40 having the multi-layer structure may include, for example, one or more adhesive layers and one or more support layers. For example, the adhesive layer may effectively prevent the cathode layer 10 from being separated from the solid electrolyte layer 30 due to a change in volume of the cathode layer 10 which is caused during a charging/discharging process of the all-solid secondary battery 1. In other embodiments, the adhesive layer may provide a binding force between the support layer and other layers to improve film strength of the first inactive member 40. The support layer may provide a support force to the first inactive member 40, may prevent non-uniformity of pressure applied to the solid electrolyte layer 30 during a pressing process or a charging/discharging process, and may prevent shape deformation of the all-solid secondary battery 1 to be manufactured.

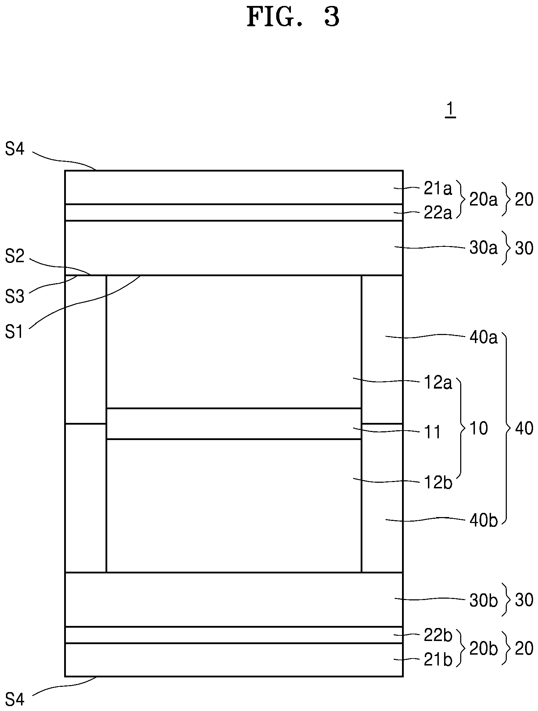

Referring to FIG. 3, an all-solid secondary battery 1 may include a cathode layer 10, anode layers 20 (20a and 20b), and solid electrolyte layers 30 (30a and 30b) disposed between the cathode layer 10 and the anode layers 20. The cathode layer 10 may include a cathode current collector 11 and each of a first cathode active material layer 12a and a second cathode active material layer 12b disposed on two sides of the cathode current collector 11. The solid electrolyte layers 30 may include a first solid electrolyte layer 30a in contact with the first cathode active material layer 12a and a second solid electrolyte layer 30b in contact with the second cathode active material layer 12b, respectively. The anode layers 20 may include a first anode layer 20a in contact with the first solid electrolyte layer 30a and a second anode layer 20b in contact with the second solid electrolyte layer 30b, respectively. First inactive members 40 may be disposed between the first solid electrolyte layer 30a and the second solid electrolyte layer 30b opposite to each other to surround a side of the cathode layer 10. The first inactive members 40 include, for example, a (1a)^{th} inactive member 40a in contact with the first solid electrolyte layer 30a and a (1b)^{th} inactive member 40b in contact with the second solid electrolyte layer 30b. In some embodiments, the all-solid secondary battery 1 may have a bi-cell structure. The all-solid secondary battery 1 may have such a bi-cell structure, and thus the solid electrolyte layers 30 and the anode layers 20 may be symmetrically disposed opposite to each other with respect to the cathode layer 10, thereby more effectively suppressing structural deformation or the like due to pressure applied during manufacturing of the all-solid secondary battery 1. In some embodiments, cracks of the solid electrolyte layer 30 may be suppressed during a manufacturing process and/or a charging/discharging process of the all-solid secondary battery 1 to prevent a short circuit of the all-solid secondary battery 1, thereby further improving the cycle characteristics of the all-solid secondary battery 1. In other embodiments, only one cathode current collector 11 may be used for a plurality of cathode active material layers 12a and 12b, and thus an energy density of the all-solid secondary battery 1 may be increased.

Referring to FIGS. 1 to 5, the first inactive member 40 may be, for example, a flame retardant inactive member. The flame retardant inactive member may provide flame retardancy to prevent a possibility of thermal runaway and ignition of the all-solid secondary battery 1. In some embodiments, the safety of the all-solid secondary battery 1 may be further improved. The flame retardant inactive member may absorb residual moisture in the all-solid secondary battery 1, and thus the deterioration of the all-solid secondary battery 1 may be prevented to improve the lifespan characteristics of the all-solid secondary battery 1.

The flame retardant inactive member may include, for example, a matrix and a filler. The matrix may include, for example, a substrate and a reinforcement material. The matrix may include, for example, a fibrous substrate and a fibrous reinforcement material. The matrix may include the substrate and thus may have elasticity. In some embodiments, the matrix may effectively receive a change in volume of the all-solid secondary battery 1 during charging/discharging and may be disposed at any one of various positions. The substrate included in the matrix may include, for example, a first fibrous material. The substrate may include the first fibrous material, thereby effectively receiving a change in volume of the cathode layer 10 caused during a charging/discharging process of the all-solid secondary battery 1 and effectively suppressing the deformation of the first inactive member 40 due to the change in volume of the cathode layer 10. The first fibrous material may be, for example, a material having an aspect ratio of 5 or more, 20 or more, or 50 or more. The first fibrous material may be, for example, a material having an aspect ratio of about 5 to about 1,000, about 20 to about 1,000, or about 50 to about 1,000. The first fibrous material may be, for example, an insulating material. The first fibrous material may be the insulating material, thereby effectively preventing a short circuit between the cathode layer 10 and the anode layer 20 caused by lithium dendrites or the like generated during charging/discharging of the all-solid secondary battery 1. The first fibrous material may include, for example, at least one selected from a pulp fiber, an insulating polymer fiber, and an ion-conductive polymer fiber. The matrix may include the reinforcement material, and thus strength of the matrix may be improved. In some embodiments, the matrix may prevent an excessive change in volume during charging/discharging of the all-solid secondary battery 1 and prevent the deformation of the all-solid secondary battery 1. The reinforcement material included in the matrix may include, for example, a second fibrous material. The reinforcement material may include the second fibrous material, and thus strength of the matrix may be more uniformly increased. The second fibrous material may be, for example, a material having an aspect ratio of 3 or more, 5 or more, or 10 or more. The second fibrous material may be, for example, a material having an aspect ratio of about 3 to about 100, about 5 to about 100, or about 10 to about 100. The second fibrous material may be, for example, a flame retardant material. The second fibrous material may be the flame retardant material, thereby effectively suppressing ignition due to thermal runaway caused by an external impact or a charging/discharging process of the all-solid secondary battery 1. The second fibrous material may be, for example, a glass fiber, a metal oxide fiber, a ceramic fiber, or the like.

The flame retardant inactive member may include the filler in addition to the matrix. The filler may be disposed inside the matrix, on a surface of the matrix, or both inside and on the surface. The filler may be, for example, an inorganic material. The filler included in the flame retardant inactive member may be, for example, a moisture getter. The filler may adsorb moisture at a temperature of, for example, less than 100 °C to remove moisture remaining in the all-solid secondary battery 1, thereby preventing the deterioration of the all-solid secondary battery 1. If a temperature of the all-solid secondary battery 1 may be increased to be greater than or equal to 150 °C or more due to thermal runaway caused by an external impact or a charging/discharging process of the all-solid secondary battery 1, the filler may release adsorbed moisture to effectively suppress ignition of the all-solid secondary battery 1. For example, the filler may be, for example, a flame retardant. The filler may be, for example, metal hydroxide having moisture adsorbability. Metal hydroxide included in the filler may be, for example, Mg(OH)₂, Fe(OH)₃, Sb(OH)₃, Sn(OH)₄, Ti(OH)₃, Zr(OH)₄, Al(OH)₃, or a combination thereof. A content of the filler included in the flame retardant inactive member may be in a range of, for example, about 10 parts by weight to about 80 parts by weight, about 20 parts by weight to about 80 parts by weight, about 30 parts by weight to about 80 parts by weight, about 40 parts by weight to about 80 parts by weight, about 50 parts by weight to about 80 parts by weight, about 60 parts by weight to about 80 parts by weight, or about 65 parts by weight to about 80 parts by weight with respect to about 100 parts by weight of the first inactive member 40 having flame retardancy.

The flame retardant inactive member may further include, for example, a binder. The binder may include, for example, a curable polymer or a non-curable polymer. The curable polymer is a polymer that is cured by heat and/or pressure. The curable polymer may be, for example, a solid at room temperature. The first inactive member 40 having flame retardancy may include, for example, a thermosetting film and/or a cured product thereof. A thermosetting polymer may be, for example, TSA-66 manufactured by TORAY INDUSTRIES, INC.

The flame retardant inactive member may additionally include other materials in addition to the above-described substrate, reinforcement material, filler, and binder. The flame retardant inactive member may further include at least one selected from, for example, paper, an insulating polymer, an ion-conductive polymer, an insulating inorganic material, an oxide-based solid electrolyte, and a sulfide-based solid electrolyte. The insulating polymer may be, for example, an olefin-based polymer such as PP or PE.

A density of the substrate or the reinforcement material included in the flame retardant inactive member may be in a range of, for example, about 10% to about 300%, about 10% to about 150%, about 10% to about 140%, about 10% to about 130%, or about 10% to about 120% of a density of a cathode active material included in a cathode active material layer 12.

The first inactive member 40 may be a member that does not include an electrochemically active material, for example, an electrode active material. An electrode active material may be a material that absorbs/desorbs lithium. The first inactive member 40 may be a member consisting of a material that is used in the art and is a material other than an electrode active material.

### [Anode layer]

### [Anode layer: anode active material]

Referring to FIGS. 1 to 5, the anode layer 20 may include a first anode active material layer 22. The first anode active material layer 22 may include, for example, an anode active material and a binder.

The anode active material included in the first anode active material layer 22 may be, for example, an anode material that may form an alloy or a compound together with lithium.

The anode active material included in the first anode active material layer 22 may have, for example, a particle form. The anode active material having the particle form may have an average particle diameter of, for example, 4 µm or less, 3 µm or less, 2 µm or less, 1 µm or less, 500 nm or less, 300 nm or less, or 100 nm or less. The anode active material having the particle form may have an average particle diameter of, for example, about 10 nm to about 4 µm, about 10 nm to about 3 µm, about 10 nm to about 2 µm, about 10 nm to about 1 µm, about 10 nm to about 500 nm, about 10 nm to about 300 nm, or about 10 nm to about 100 nm. The anode active material may have an average particle diameter within such a range, and thus reversible absorbing and/or desorbing of lithium may be more easily performed during charging/discharging. The average particle diameter of the anode active material may be, for example, a median diameter (D50) measured using a laser type particle size distribution meter.

The anode active material included in the first anode active material layer 22 may include, for example, at least one selected from a carbon-based anode active material and a metal or metalloid anode active material.

The carbon-based anode active material may include, for example, amorphous carbon, crystalline carbon, porous carbon, or a combination thereof.

The carbon-based anode active material may be amorphous carbon. Amorphous carbon may be, for example, CB, AB, furnace black (FB), KB, graphene or the like but is not necessarily limited thereto. Any material classified as amorphous carbon in the art may be used. Amorphous carbon may be carbon that does not have crystallinity or has very low crystallinity and is distinguished from crystalline carbon or graphite-based carbon.

The carbon-based anode active material may be, for example, porous carbon. A pore volume of porous carbon may be in a range of, for example, about 0.1 cc/g to about 10.0 cc/g, about 0.5 cc/g to about 5 cc/g, or about 0.1 cc/g to about 1 cc/g. An average pore diameter of porous carbon may be in a range of, for example, about 1 nm to about 50 nm, about 1 nm to about 30 nm, or about 1 nm to about 10 nm. A BET specific surface area of porous carbon may be in a range of, for example, about 100 m²/g to about 3,000 m²/g. The BET specific surface area of porous carbon may be measured, for example, according to ISO 9277:2022.

The metal or metalloid anode active material may include at least one selected from the group consisting of gold (Au), platinum (Pt), palladium (Pd), silicon (Si), silver (Ag), aluminium (Al), bismuth (Bi), tin (Sn), and zinc (Zn), but one or more embodiments are not necessarily limited thereto. Any material, which is used as a metal anode active material or a metalloid anode active material forming an alloy or a compound together with lithium in the art, may be used. For example, nickel (Ni) may not form an alloy with lithium, and thus nickel (Ni) may not be a metal anode active material.

Among such anode active materials, the first anode active material layer 22 may include one anode active material or a mixture of a plurality of different anode active materials. For example, the first anode active material layer 22 may include only amorphous carbon or at least one selected from the group consisting of gold (Au), platinum (Pt), palladium (Pd), silicon (Si), silver (Ag), aluminium (Al), bismuth (Bi), tin (Sn), and zinc (Zn). In other embodiments, the first anode active material layer 22 may include a mixture of amorphous carbon and at least one selected from the group consisting of gold (Au), platinum (Pt), palladium (Pd), silicon (Si), silver (Ag), aluminium (Al), bismuth (Bi), tin (Sn), and zinc (Zn). A mixing ratio of the mixture of amorphous carbon to gold or the like may be in a range of, for example, about 99:1 to about 1:99, about 10:1 to about 1:2, about 5:1 to about 1:1, or about 4:1 to about 2:1 based on a weight ratio but is not necessarily limited to such a range and is selected according to the required characteristics of the all-solid secondary battery 1. The anode active material may have such a composition, and thus the cycle characteristics of the all-solid secondary battery 1 may be further improved.

The anode active material included in the first anode active material layer 22 may include, for example, a mixture of first particles consisting of amorphous carbon and second particles consisting of a metal or a metalloid. A metal or metalloid may include, for example, gold (Au), platinum (Pt), palladium (Pd), silicon (Si), silver (Ag), aluminum (Al), bismuth (Bi), tin (Sn), or the like. In other embodiments, a metalloid is a semiconductor. A content of the second particles may be in a range of about 1 wt% to about 99 wt%, about 1 wt% to about 60 wt%, about 8 wt% to about 60 wt%, about 10 wt% to about 50 wt%, about 15 wt% to about 40 wt%, or about 20 wt% to about 30 wt% with respect to the total weight of the mixture. The second particles may have a content within such a range, for example, and thus the cycle characteristics of the all-solid secondary battery 1 may be further improved.

In other embodiments, the first anode active material layer 22 may include a composite anode active material. The composite anode active material may include, for example, a carbon-based support and a metal-based anode active material supported on the carbon-based support. The composite anode active material may have such a structure so that the localization of the metal-based anode active material in the first anode active material layer 22 may be prevented, and the uniform distribution thereof may be obtained. In some embodiments, the cycle characteristics of the all-solid secondary battery 1 including the first anode active material layer 22 may be further improved.

The metal-based anode active material supported on the carbon-based support may include, for example, a metal, a metal oxide, a composite of a metal and a metal oxide, or a combination thereof. Examples of the metal may include gold (Au), platinum (Pt), palladium (Pd), silicon (Si), silver (Ag), aluminium (Al), bismuth (Bi), tin (Sn), tellurium (Te), zinc (Zn), and the like. Examples of the metal oxide may include gold (Au) oxide, platinum (Pt) oxide, palladium (Pd) oxide, silicon (Si) oxide, silver (Ag) oxide, aluminium (Al) oxide, bismuth (Bi) oxide, tin (Sn) oxide, tellurium (Te) oxide, zinc (Zn) oxide, and the like. The metal oxide may include, for example, AuₓO_{y}, wherein 0<x≤2 and 0<y≤3, PtₓO_{y}, wherein 0<x≤1 and 0<y≤2, PdₓO_{y}, wherein 0<x≤1 and 0<y≤1, SiₓO_{y}, wherein 0<x≤1 and 0<y≤2, AgₓO_{y}, wherein 0<x≤2 and 0<y≤1, AlₓO_{y}, wherein 0<x≤2 and 0<y≤3, BiₓO_{y}, wherein 0<x≤2 and 0<y≤3, SnₓO_{y}, wherein 0<x≤1 and 0<y≤2, TeₓO_{y}, wherein 0<x≤1 and 0<y≤3, ZnₓO_{y}, wherein 0<x≤1 and 0<y≤1, or a combination thereof. The composite of the metal and the metal oxide may include, for example, a composite of Au and AuₓO_{y}, wherein 0<x≤2 and 0<y≤3, a composite of Pt and PtₓO_{y}, wherein 0<x≤1 and 0<y≤2, a composite of Pd and PdₓO_{y}, wherein 0<x≤1 and 0<y≤1, a composite of Si and SiₓO_{y}, wherein 0<x≤1 and 0<y≤2, a composite of Ag and AgₓO_{y}, wherein 0<x≤2 and 0<y≤1, a composite of Al and AlₓO_{y}, wherein 0<x≤2 and 0<y≤3, a composite of Bi and BiₓO_{y}, wherein 0<x≤2 and 0<y≤3, a composite of Sn and SnₓO_{y}, wherein 0<x≤1 and 0<y≤2, a composite of Te and TeₓO_{y}, wherein 0<x≤1 and 0<y≤3, a composite of Zn and ZnₓO_{y}, wherein 0<x≤1 and 0<y≤1, or a combination thereof.

The carbon-based support may include, for example, amorphous carbon. Examples of the amorphous carbon may include CB, AB, furnace black (FB), KB, graphene, activated carbon, CNFs, CNTs, and the like, but one or more embodiments are not necessarily limited thereto. Any material may be used as long as the material may be classified as amorphous carbon in the art. The amorphous carbon may be carbon that has no crystallinity or very low crystallinity and may be distinguished from crystalline carbon or graphite-based carbon. A carbonaceous material may be, for example, a carbon-based anode active material.

The composite anode active material may have, for example, a particle form. A particle diameter (e.g. an average particle diameter, such as D50) of the composite anode active material having the particle form may be, for example, in a range of about 10 nm to about 4 µm, about 10 nm to about 1 µm, about 10 nm to about 500 nm, about 10 nm to about 200 nm, or about 10 nm to about 100 nm. The composite anode active material may have a particle diameter in such a range, and thus the reversible absorbing and/or desorbing of lithium may become easier during charging/discharging. The metal-based anode active material supported on the carbon-based support may have, for example, a particle form. A particle diameter of the metal-based anode active material may be, for example, in a range of about 1 nm to about 200 nm, about 1 nm to about 150 nm, about 5 nm to about 100 nm, or about 10 nm to about 50 nm. The carbon-based support may have, for example, a particle form. A particle diameter of the carbon-based support may be, for example, in a range of about 10 nm to about 2 µm, about 10 nm to about 1 µm, about 10 nm to about 500 nm, about 10 nm to about 200 nm, or about 10 nm to about 100 nm. The carbon-based support may have a particle diameter in such a range and thus may be more uniformly disposed in the first anode active material layer 22. The carbon-based support may include, for example, nanoparticles having a particle diameter of 500 nm or less. The particle diameter of the composite anode active material, the particle diameter of the metal-based anode active material, and the particle diameter of the carbon-based support may each be, for example, an average particle diameter. The average particle diameter may be, for example, a median diameter (D50) measured by using a laser type particle size distribution meter. In other embodiments, the average particle diameter may be determined automatically by using software, for example, from an electron microscope image or may be manually determined according to a manual.

### [Anode layer: binder]

The binder included in the first anode active material layer 22 may be, for example, SBR, polytetrafluoroethylene, polyvinylidene fluoride, PE, a vinylidene fluoride/hexafluoropropylene copolymer, polyacrylonitrile, polymethyl methacrylate, or the like but is not necessarily limited thereto. Any material used as a binder in the art may be used. The binder may include a single binder or a plurality of different binders.

The first anode active material layer 22 may include the binder and thus is stabilized on the anode current collector 21. In other embodiments, cracks of the first anode active material layer 22 may be suppressed despite a change in volume and/or relative position of the first anode active material layer 22 during charging/discharging. For example, if the first anode active material layer 22 does not include a binder, the first anode active material layer 22 may be easily separated from the anode current collector 21. If the first anode active material layer 22 is separated from the anode current collector 21, at an exposed portion of the anode current collector 21, the anode current collector 21 may come into contact with the solid electrolyte layer 30, and thus a possibility of the occurrence of a short circuit may be increased. For example, slurry in which materials constituting the first anode active material layer 22 are dispersed may be applied on the anode current collector 21 and dried to manufacture the first anode active material layer 22. The binder may be included in the first anode active material layer 22, thereby stably dispersing an anode active material in the slurry. For example, if the slurry is applied on the anode current collector 21 through a screen printing method, clogging of a screen (for example, clogging due to aggregates of the anode active material) may be suppressed.

### [Anode layer: other additives]

The first anode active material layer 22 may further include additives used in a conventional all-solid secondary battery, such as a filler, a coating agent, a dispersant, and an ion-conductive adjuvant.

### [Anode layer: solid electrolyte]

The first anode active material layer 22 may further include a solid electrolyte. The solid electrolyte may be, for example, a material selected from solid electrolytes included in the solid electrolyte layer 30. The solid electrolyte included in the first anode active material layer 22 may serve as a reaction point at which the formation of a lithium metal starts in the first anode active material layer 22 or may serve as a space for storing the formed lithium metal or as a path for transferring lithium ions. The solid electrolyte may be omitted.

In the first anode active material layer 22, a content of the solid electrolyte may be high, for example, in a region adjacent to the solid electrolyte layer 30, and may be low in a region adjacent to the anode current collector 21. In the first anode active material layer 22, the solid electrolyte may have, for example, a concentration gradient in which a concentration decreases from the region adjacent to the solid electrolyte layer 30 to the region adjacent to the anode current collector 21.

### [Anode layer: first anode active material layer]

A ratio (B/A) of an initial charge capacity (B) of the first anode active material layer 22 to initial charge capacity (A) of the cathode active material layer 12 may be in a range of about 0.005 to about 0.45. The initial charge capacity of the cathode active material layer 12 may be determined by charging from a 1^{st} OCV up to a maximum charging voltage for Li/Li⁺. The initial charge capacity of the anode active material layer 22 may be determined by charging from a 2^{nd} OCV up to a voltage of about 0.01 V for Li/Li⁺.

The maximum charging voltage may be determined according to types of cathode active materials. The maximum charging voltage may be, for example, about 1.5 V, about 2.0 V, about 2.5 V, about 3.0 V, about 3.5 V, about 4.0 V, about 4.2 V, or about 4.3 V. For example, the maximum charging voltage of Li₂S or a Li₂S composite may be about 2.5 V for Li/Li⁺. For example, the maximum charging voltage of Li₂S or a Li₂S composite may be about 3.0 V for Li/Li⁺. The ratio (B/A) of the initial charge capacity (B) of the first anode active material layer 22 to the initial charge capacity (A) of the cathode active material layer 12 may be in a range of, for example, about 0.01 to about 0.3, about 0.01 to about 0.2, or about 0.05 to about 0.1.

The initial charge capacity (mAh) of the cathode active material layer 12 may be obtained by multiplying charge specific capacity (mAh/g) of the cathode active material layer 12 by mass (g) of the cathode active material of the cathode active material layer 12. If a plurality of types of cathode active materials are used, a value may be calculated by multiplying charge specific capacity by mass for each cathode active material, and the sum of such values may be the initial charge capacity of the cathode active material layer 12. The initial charge capacity of the first anode active material layer 22 may also be calculated in the same manner. The initial charge capacity of the first anode active material layer 22 may be obtained by multiplying charge specific capacity (mAh/g) of the first anode active material layer 22 by mass (g) of the anode active material of the first anode active material layer 22. If a plurality of types of anode active materials are used, a value may be calculated by multiplying charge specific capacity by mass for each anode active material, and the sum of such values may be the initial charge capacity of the first anode active material layer 22. The charge specific capacity of each of the cathode active material and the anode active material may be measured using an all-solid half-cell using a lithium metal as a counter electrode. The initial charge capacity of each of the cathode active material layer 12 and the first anode active material layer 22 may be directly measured at a constant current density of, for example, about 0.1 mA/cm² using an all-solid half-cell. For a cathode, the measurement may be performed at an operating voltage from the 1^{st} OCV to a maximum charging voltage, for example, about 3.0 V vs. Li/Li⁺. For an anode, the measurement may be performed at an operating voltage from the 2^{nd} OCV to about 0.01 V for the anode, for example, a lithium metal. For example, an all-solid half-cell including a cathode active material layer may be charged from the 1^{st} OCV to about 3.0 V at a constant current of about 0.1 mA/cm², and an all-solid half-cell including a first anode active material layer may be charged from the 2^{nd} OCV to about 0.01 V at a constant current of about 0.1 mA/cm². A current density during constant current charging may be, for example, about 0.2 mA/cm² or about 0.5 mA/cm². The all-solid half-cell including the cathode active material layer may be charged, for example, from the 1^{st} OCV to about 2.0 V, about 2.5 V, about 3.5 V, or about 4.0 V. A maximum charging voltage of a cathode active material layer may be determined according to a maximum voltage of a battery that satisfies safety conditions according to JIS C 8712:2015 of the Japanese Standard Association.

If the initial charge capacity of the first anode active material layer 22 is excessively low, the first anode active material layer 22 may become very thin, and thus lithium dendrites formed between the first anode active material layer 22 and the anode current collector 21 during a repeated charging/discharging process may collapse the first anode active material layer 22, which makes it difficult to improve the cycle characteristics of the all-solid secondary battery 1. If charge capacity of the first anode active material layer 22 is excessively increased, an energy density of the all-solid secondary battery 1 may be lowered, and internal resistance of the all-solid secondary battery 1 due to the first anode active material layer 22 may be increased, which makes it difficult to improve the cycle characteristics of the all-solid secondary battery 1.

A thickness of the first anode active material layer 22 may be, for example, 50% or less, 40% or less, 30% or less, 20% or less, 10% or less, or 5% or less of a thickness of the cathode active material layer 12. The thickness of the first anode active material layer 22 may be in a range of, for example, about 1% to about 50%, about 1% to about 40%, about 1% to about 30%, about 1% to about 20%, about 1% to about 10%, or about 1% to about 5% of the thickness of the cathode active material layer 12. The thickness of the first anode active material layer 22 may be in a range of, for example, about 1 µm to about 20 µm, about 2 µm to about 15 µm, or about 3 µm to about 10 µm. If the first anode active material layer 22 is excessively thin, lithium dendrites formed between the first anode active material layer 22 and the anode current collector 21 may collapse the first anode active material layer 22, which makes it difficult to improve the cycle characteristics of the all-solid secondary battery 1. If the thickness of the first anode active material layer 22 is excessively increased, an energy density of the all-solid secondary battery 1 may be lowered, and internal resistance of the all-solid secondary battery 1 due to the first anode active material layer 22 may be increased, which makes it difficult to improve the cycle characteristics of the all-solid secondary battery 1. If the thickness of the first anode active material layer 22 is decreased, for example, the initial charge capacity of the first anode active material layer 22 may also be decreased.

### [Anode layer: second anode active material layer]

Although not shown in the drawings, the all-solid secondary battery 1 further may include, for example, a second anode active material layer which, after the all-solid secondary battery 1 is charged, is disposed between the anode current collector 21 and the first anode active material layer 22. The second anode active material layer may be a metal layer including lithium or a lithium alloy. The metal layer may include lithium or a lithium alloy. In some embodiments, the second anode active material layer may be the metal layer including lithium, and thus the second anode active material layer may serve as, for example, a lithium reservoir. The lithium alloy may be, for example, a Li-Al alloy, a Li-Sn alloy, a Li-In alloy, a Li-Ag alloy, a Li-Au alloy, a Li-Zn alloy, a Li-Ge alloy, a Li-Si alloy, or the like but is not limited thereto. Any material used as a lithium alloy in the art may be used. The second anode active material layer may consist of one selected from such alloys or lithium or may consist of one selected from a plurality of types of alloys. The second anode active material layer may be, for example, a plated layer. For example, during a charging process of the all-solid secondary battery 1, the second anode active material layer may be precipitated between the first anode active material layer 22 and the anode current collector 21.

A thickness of the second anode active material layer may be in a range of, for example, about 1 µm to about 500 µm, about 1 µm to about 200 µm, about 1 µm to about 150 µm, about 1 µm to about 100 µm, or about 1 µm to about 50 µm but is not particularly limited. If the second anode active material layer is excessively thin, it is difficult for the second anode active material layer to serve as a lithium reservoir. If the second anode active material layer is excessively thick, there may be a possibility that the mass and volume of the all-solid secondary battery 1 are increased, and the cycle characteristics of the all-solid secondary battery 1 are rather deteriorated.

In other embodiments, in the all-solid secondary battery 1, for example, before the all-solid secondary battery 1 is assembled, the second anode active material layer may be disposed between the anode current collector 21 and the first anode active material layer 22. If the second anode active material layer is disposed between the anode current collector 21 and the first anode active material layer 22 before the all-solid secondary battery 1 is assembled, the second anode active material layer may be the metal layer including lithium and thus serves as a lithium reservoir. For example, before the all-solid secondary battery 1 is assembled, a lithium foil may be disposed between the anode current collector 21 and the first anode active material layer 22.

If the second anode active material layer may be precipitated by the all-solid secondary battery 1 being charged after being assembled, the second anode active material layer may not be included during assembling of the all-solid secondary battery 1, and thus an energy density of the all-solid secondary battery 1 may be increased. If the all-solid secondary battery 1 is charged, the first anode active material layer 22 may be charged beyond the charge capacity thereof. For example, the first anode active material layer 22 may be overcharged. At the beginning period of charging, lithium may be absorbed in the first anode active material layer 22. The anode active material included in the first anode active material layer 22 may form an alloy or a compound together with lithium ions moving from the cathode layer 10. If the first anode active material layer 22 is charged beyond capacity thereof, for example, lithium may be precipitated on a rear side of the first anode active material layer 22, for example, between the anode current collector 21 and the first anode active material layer 22, and a metal layer corresponding to the second anode active material layer may be formed by the precipitated lithium. The second anode active material layer may be a metal layer mainly consisting of lithium (for example, metal lithium). Such a result may be obtained, for example, because the anode active material included in the first anode active material layer 22 may include a material that forms an alloy or a compound together with lithium. During discharging, lithium in the first anode active material layer 22 and the second anode active material layer, for example, the metal layer, may be ionized to move toward the cathode layer 10. In some embodiments, in the all-solid secondary battery 1, lithium may be used as an anode active material. In other embodiments, the first anode active material layer 22 may cover the second anode active material layer, and thus the first anode active material layer 22 may serve as a protective layer for the second anode active material layer, for example, the metal layer, and concurrently may serve to suppress precipitation growth of lithium dendrites. In some embodiments, a short circuit and a capacity reduction of the all-solid secondary battery 1 may be suppressed, and in some embodiments, the cycle characteristics of the all-solid secondary battery 1 may be improved. In other embodiments, if the second anode active material layer is disposed by the all-solid secondary battery 1 being charged after being assembled, the anode layer 20, for example, the anode current collector 21, the first anode active material layer 22, and a region therebetween, may be Li-free regions that do not include lithium (Li) in an initial state of the all-solid secondary battery 1 or in a state after the all-solid secondary battery 1 is fully discharged.

### [Anode Layer: anode current collector]

The anode current collectors 21 (21a or 21b) may consist of, for example, a material that does not react with lithium, for example, does not form either an alloy or a compound with lithium. A material constituting the anode current collector 21 may be, for example, copper (Cu), stainless steel, titanium (Ti), iron (Fe), cobalt (Co), or nickel (Ni) but is not necessarily limited thereto. Any material used as an electrode current collector in the art may be used. The anode current collector 21 may consist of at least one selected from the above-described metals, an alloy of two or more metals, or a coating material. The anode current collector 21 may be, for example, in the form of a plate or foil.

For example, although not shown in the drawings, the all-solid secondary battery 1 may further include a thin film including an element, which is capable of forming an alloy together with lithium, on one side of the anode current collector 21. The thin film may be disposed between the anode current collector 21 and the first anode active material layer 22. The thin film may include, for example, an element capable of forming an alloy together with lithium. The element capable of forming an alloy together with lithium may be, for example, gold, silver, zinc, tin, indium, silicon, aluminium, bismuth, or the like but is not necessarily limited thereto. Any element capable of forming an alloy together with lithium in the art may be used. The thin film may consist of at least one selected from the metals or an alloy of a plurality of metals. The thin film may be disposed on one side of the anode current collector 21, for example, thereby further flattening a precipitated form of the second anode active material layer precipitated between the thin film and the first anode active material layer 22 and further improving the cycle characteristics of the all-solid secondary battery 1.

A thickness of the thin film may be in a range of, for example, about 1 nm to about 800 nm, about 10 nm to about 700 nm, about 50 nm to about 600 nm, or about 100 nm to about 500 nm. If the thickness of the thin film is less than about 1 nm, it may be difficult for the thin film to function. If the thin film is excessively thick, the thin film itself absorbs lithium, and thus an amount of lithium precipitated at an anode may decrease, resulting in a decrease in energy density of the all-solid secondary battery 1 and resulting in degradation in cycle characteristics of the all-solid secondary battery 1. The thin film may be disposed on the anode current collector 21 through, for example, a vacuum deposition method, a sputtering method, a plating method, or the like, and any method capable of forming a thin film in the art may be used.

Although not shown in the drawings, the anode current collector 21 may include, for example, a base film and a metal layer disposed on one side or two sides of the base film. The base film may include, for example, a polymer. The polymer may be, for example, a thermoplastic polymer. The polymer may include, for example, PET, PE, PP, PBT, PI, or a combination thereof. The polymer may be an insulating polymer. The base film may include an insulating thermoplastic polymer, and thus, if a short circuit occurs, the base film may soften or liquefy to interrupt the operation of a battery, thereby suppressing a rapid increase in current. The metal layer may include, for example, copper (Cu), stainless steel, titanium (Ti), iron (Fe), cobalt (Co), nickel (Ni), or an alloy thereof. The anode current collector 21 may additionally include a metal chip and/or a lead tab. The base film, metal layer, metal chip, and lead tab of the anode current collector 21 may be defined as for the above-described cathode current collector 11. The anode current collector 21 may have such a structure, and thus a weight of an anode may be reduced, thereby improving the energy density of the anode and a lithium battery.

### [Anode layer: second inactive member]

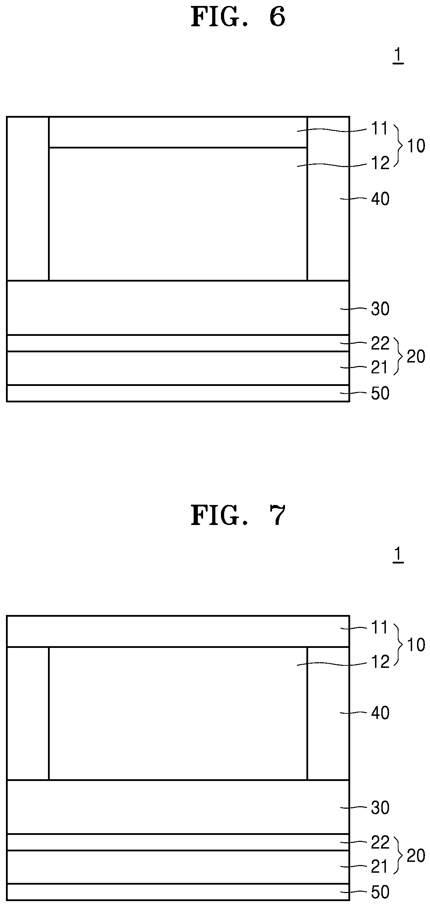

Referring to FIGS. 6 to 9, the all-solid secondary battery 1 (1a or 1b) may further include second inactive members 50 (50a, 50b, and 50c) disposed on the other sides of the anode current collectors 21 (21a and 21b).

The second inactive member 50 may be different from the first inactive member 40 in that the second inactive member 50 may additionally include a conductive material to have conductivity. The second inactive member 50 may be, for example, a conductive flame retardant inactive member.

The conductive material may include, for example, graphite, CB, AB, KB, Denka black, carbon fiber, CNTs, graphene, a metal fiber, a metal powder, or the like. Electronic conductivity at about 25 °C of the second inactive member 50 may be, for example, 100 times or more, 1,000 times or more, or 10,000 times or more electronic conductivity at about 25 °C of the first inactive member 40.

The second inactive member 50 may include, for example, a matrix, a filler, and a conductive material. The matrix may include, for example, a substrate and a reinforcement material. The second inactive member 50 may further include a filler and a binder. A content of the conductive material included in the second inactive member 50 may be in a range of, for example, about 1 part by weight to about 30 parts by weight, about 1 part by weight to about 20 parts by weight, about 1 part by weight to about 15 parts by weight, about 1 part by weight to about 10 parts by weight, about 5 parts by weight to about 40 parts by weight, about 5 parts by weight to about 30 parts by weight, or about 5 parts by weight to about 35 parts by weight with respect to about 100 parts by weight of the second inactive member 50.

A Young's modulus of the second inactive member 50 may be, for example, less than a Young's modulus of the anode current collector 21. The Young's modulus of the second inactive member 50 may be, for example, 50% or less, 30% or less, 10% or less, or 5% or less of the Young's modulus of the anode current collector 21. The Young's modulus of the second inactive member 50 may be in a range of, for example, about 0.01% to about 50%, about 0.1% to about 30%, about 0.1% to about 10%, or about 1% to about 5% of the Young's modulus of the anode current collector 21. The Young's modulus of the second inactive member 50 may be, for example, 100 MPa or less, 50 MPa or less, 30 MPa or less, 10 MPa or less, or 5 MPa or less. The Young's modulus of the second inactive member 50 may be in a range of, for example, about 0.01 MPa to about 100 MPa, about 0.1 MPa to about 50 MPa, about 0.1 MPa to about 30 MPa, about 0.1 MPa to about 10 MPa, or about 1 MPa to about 5 MPa. A Young's modulus of the second inactive member 50 may be measured by using DMA(Dynamic Mechanical Analyzer) or UTM(Universal Test Machine). A Young's modulus of the second inactive member 50 may be measured according to ASTM D638.

The second inactive members 50 (50a and 50b) may have conductivity, and thus the second inactive member 50 may serve as the anode current collector 21. In other embodiments, the second inactive members 50 (50a and 50b) may have the Young's modulus that is less than that of the anode current collector 21, and thus the second inactive members 50 may effectively receive a change in volume of the anode layer 20 during charging/discharging of the all-solid secondary battery 1. In some embodiments, the second inactive members 50 (50a and 50b) may effectively relieve internal stress due to a change in volume of the all-solid secondary battery 1 during charging/discharging of the all-solid secondary battery 1, thereby improving the cycle characteristics of the all-solid secondary battery 1.

A thickness of the second inactive member 50 may be greater than, for example, the thickness of the first anode active material layer 22. The second inactive member 50 may be thicker than the first anode active material layer 22, and thus the second inactive member 50 may more effectively receive a change in volume of the anode layer 20 during charging/discharging. The thickness of the first anode active material layer 22 may be, for example, 50% or less, 40% or less, 30% or less, 20% or less, or 10% or less of the thickness of the second inactive member 50. The thickness of the first anode active material layer 22 may be in a range of, for example, about 1% to about 50%, about 1% to about 40%, about 1% to about 30%, about 1% to about 20%, or about 1% to about 10% of the thickness of the second inactive member 50. The thickness of the second inactive member 50 may be in a range of, for example, about 1 µm to about 300 µm, about 10 µm to about 300 µm, about 50 µm to about 300 µm, or about 100 µm to about 200 µm. If the second inactive member 50 is excessively thin, an intended effect may be difficult to provide, and if the second inactive member 50 is excessively thick, an energy density of the all-solid secondary battery 1 may be decreased. A form of the second inactive member 50 is not particularly limited and may be selected according to a form of the all-solid secondary battery 1. The second inactive member 50 may have, for example, a sheet form, a rod form, or a gasket form.

The second inactive member 50 may be disposed, for example, on one side or two sides of the all-solid secondary battery 1. The second inactive member 50 may be disposed, for example, between a plurality of stacked all-solid secondary batteries 1. For example, the second inactive member 50 may be disposed between the plurality of stacked all-solid secondary batteries 1, on an uppermost side, and/or on a lowermost side.

A ratio of a volume of the all-solid secondary battery 1 before charging to a volume of the all-solid secondary battery 1 after charging, for example, a volumetric expansion ratio, may be, for example, 15% or less, 10% or less, or 5% or less. A volume of the all-solid secondary battery 1 before charging may be measured at 25 °C before formation step by measuring thickness of the all-solid battery. Further, a volume of the all-solid secondary battery 1 after charging may be measured in the formation step by measuring thickness of the all-solid battery after completing 1^{st} charging step at 25 °C.

An increase in volume of the anode layer 20 during charging of the all-solid secondary battery 1 may be offset by a decrease in volume of the cathode layer 10, and the second inactive member 50 may receive the change in volume of the anode layer 20, which mitigates a change in volume of the all-solid secondary battery 1 before and after charging.

An energy density per unit volume of the all-solid secondary battery 1 may be in a range of, for example, about 500 Wh/L to about 900 Wh/L, about 500 Wh/L to about 800 Wh/L, or about 500 Wh/L to about 700 Wh/L. The energy density per unit weight of the all-solid secondary battery 1 may be in a range of, for example, about 350 Wh/g to about 600 Wh/g, about 350 Wh/g to about 580 Wh/g, about 350 Wh/g to about 570 Wh/g, or about 350 Wh/g to 550 WhIg. The all-solid secondary battery 1 may have an energy density within such a range, and thus an increased energy density may be provided as compared with a conventional secondary battery.

### [Solid electrolyte layer]

### [Solid electrolyte layer: solid electrolyte]

Referring to FIGS. 1 to 5, the solid electrolyte layer 30 (30a, 30b) may include the solid electrolyte disposed between the cathode layer 10 and the anode layer 20. An electrolyte may include, for example, a solid electrolyte, a gel electrolyte, or a combination thereof.

The solid electrolyte may include, for example, a sulfide-based solid electrolyte, an oxide-based solid electrolyte, a polymer solid electrolyte, or a combination thereof.

The solid electrolyte may be, for example, the sulfide-based solid electrolyte. The sulfide-based solid electrolyte may be, for example, at least one selected from Li₂S-P₂S₅, Li₂S-P₂S₅-LiX, wherein X is a halogen element, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ, wherein m and n are positive numbers and Z is at least one selected from Ge, Zn, and Ga, Li₂S-GeS₂, Li₂S-SiS₂-Li₃PO₄, Li₂S-SiS₂-LiₚMO_{q}, wherein p and q are positive numbers and M is at least one selected from P, Si, Ge, B, Al, Ga, and In, Li₇₋ₓPS₆₋ₓC, wherein 0≤x≤2, Li₇₋ₓPS₆₋ₓBrₓ, wherein 0≤x≤2, and Li₇₋ₓPS₆₋ₓIₓ, wherein 0≤x≤2. The sulfide-based solid electrolyte may be prepared by treating a starting material such as Li₂S or P₂S₅ through a melt quenching method, a mechanical milling method, or the like. In other embodiments, after such treatment, heat treatment may be performed. The solid electrolyte may be in an amorphous state, a crystalline state, or a mixture state thereof. In other embodiments, the solid electrolyte may be, for example, a material that includes at least sulfur (S), phosphorus (P), and lithium (Li) as constituent elements among the above-described sulfide-based solid electrolyte materials. For example, the solid electrolyte may be a material including Li₂S-P₂S₅. If Li₂S-P₂S₅ is included as a sulfide-based solid electrolyte material that forms the solid electrolyte, a mixing molar ratio of Li₂S to P₂S₅, for example, Li₂S:P₂S₅ may be in a range of about 20:80 to about 90:10, about 25:75 to about 90:10, about 30:70 to about 70:30, or about 40:60 to about 60:40.

The sulfide-based solid electrolyte may include, for example, an argyrodite-type solid electrolyte represented by Formula 1 below.

< Formula 1> Li⁺₁₂₋ₙ₋ₓAⁿ⁺X²⁻₆₋ₓY⁻ₓ

In Formula 1, A is P, As, Ge, Ga, Sb, Si, Sn, Al, In, Ti, V, Nb, or Ta, X is S, Se, or Te, Y is Cl, Br, I, F, CN, OCN, SCN, or N₃, 1≤n≤5, and 0≤x≤2. The sulfide-based solid electrolyte may be, for example, an argyrodite-type compound including at least one selected from Li₇₋ₓPS₆₋ₓClₓ, wherein 0≤x≤2, Li₇₋ₓPS₆₋ₓBrₓ, wherein 0≤x≤2, and Li₇₋ₓPS₆₋ₓIₓ, wherein 0≤x≤2. The sulfide-based solid electrolyte may be, for example, an argyrodite-type compound including at least one selected from Li₆PS₅Cl, Li₆PS₅Br, and Li₆PS₅I.

A density of the argyrodite-type solid electrolyte may be in a range of about 1.5 g/cc to about 2.0 g/cc. The argyrodite-type solid electrolyte may have a density of 1.5 g/cc or more so that the internal resistance of the all-solid secondary battery 1 may be reduced, and the penetration of Li into the solid electrolyte layer 30 may be effectively suppressed.

The oxide-based solid electrolyte may be, for example, Li_{1+x+y}AlₓTi₂₋ₓSi_{y}P_{3-y}O₁₂, wherein 0<x<2 and 0≤y<3, BaTiO₃, Pb(Zr,Ti)O₃(PZT), Pb₁₋ₓLaₓZr_{1-y}Ti_{y}0₃ (PLZT), wherein 0≤x<1 and 0≤y<1, Pb(Mg₃Nb_{2/3})O₃-PbTiO₃ (PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃, wherein 0<x<2 and 0<y<3, LiₓAl_{y}Ti_{z}(PO₄)₃, wherein 0<x<2, 0<y<1, and 0<z<3, Li_{1+x+y}(Al, Ga)ₓ(Ti,Ge)₂₋ₓSi_{y}P_{3-y}O₁₂, wherein 0≤x≤1 and 0≤y≤1, Li_{xL}a_{y}TiO₃, wherein 0<x<2 and 0<y<3, Li₂O, LiOH, Li₂CO₃, LiAlO₂, Li₂O-Al₂O₃-SiO₂-P₂O₅-TiO₂-GeO₂, Li₃₊ₓLa₃M₂O₁₂, wherein M=Te, Nb, or Zr and 0≤x≤10, or a combination thereof. The oxide-based solid electrolyte may be prepared, for example, through a sintering method or the like.

The oxide-based solid electrolyte may be, for example, a garnet-type solid electrolyte selected from Li₇La₃Zr₂O₁₂ (LLZO) and Li₃₊ₓLa₃Zr₂₋ₐMₐO₁₂ (M-doped LLZO), wherein M=Ga, W, Nb, Ta, or Al, 0<a<2, and 0≤x≤10.

For example, the polymer solid electrolyte may include a mixture of a lithium salt and a polymer or may include a polymer having an ion-conductive functional group. The polymer solid electrolyte may be, for example, a polymer electrolyte that is in a solid state at a temperature of about 25 °C and a pressure of about 1 atm. The polymer solid electrolyte may not include, for example, a liquid. The polymer solid electrolyte may include a polymer, and the polymer may include, for example, polyethylene oxide (PEO), PVDF, vinylidene fluoride-hexafluoropropylene (PVDF-HFP), a poly(styrene-b-ethylene oxide) (PS-PEO) block copolymer, poly(styrene-butadiene), poly(styrene-isoprene-styrene), a poly(styrene-b-divinylbenzene) block copolymer, a poly(styrene-ethylene oxide-styrene) block copolymer, polystyrene sulfonate (PSS), polyvinyl fluoride (PVF), poly(methylmethacrylate) (PMMA), polyethylene glycol (PEG), polyacrylonitrile (PAN), polytetrafluoroethylene (PTFE), polyethylenedioxythiophene (PEDOT), polypyrrole (PPY), polyaniline, poly acetylene, NAFION^{™} AQUIVION^{®}, FLEMION^{®}, GORE^{™}, ACIPLEX^{™}, MORGANE^{®}-ADP, sulfonated poly(ether ether ketone) (SPEEK), sulfonated poly(arylene ether ketone ketone sulfone) (SPAEKKS), sulfonated poly(aryl ether ketone (SPAEK), poly[bis(benzimidazobenzisoquinolinones)] (SPBIBI), lithium 9,10-diphenylanthracene-2-sulfonate (DPASLi⁺), or a combination thereof, but one or more embodiments are not limited thereto. Any material may be used as long as the material may be used in a polymer electrolyte in the art. As the lithium salt, any material may be used as long as the material may be used as a lithium salt in the art. The lithium salt may include, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, or LiN(CₓF₂ₓ₊₁SO₂)(C_{y}F_{2y+1}SO₂), wherein x and y are each a natural number from 1 to 20, LiCI, Lil, or a mixture thereof. A polymer included in the polymer solid electrolyte may be, for example, a compound including 10 or more, 20 or more, 50 or more, or 100 or more repeating units. A weight average molecular weight of the polymer included in the polymer solid electrolyte may be, for example, 1,000 Daltons or more, 10,000 Daltons or more, 100,000 Daltons or more, or 1,000,000 Daltons or more.

The gel electrolyte may include, for example, a polymer gel electrolyte. The gel electrolyte may have a gel state without including, for example, a polymer.

The polymer gel electrolyte may include, for example, a liquid electrolyte and a polymer or may include an organic solvent and a polymer having an ion-conductive functional group. The polymer gel electrolyte may be, for example, a polymer electrolyte that is in a gel state at a temperature of about 25 °C and a pressure of about 1 atm. The polymer gel electrolyte may have, for example, a gel state without including a liquid. The liquid electrolyte used in the polymer gel electrolyte may include, for example, a mixture of an ionic liquid, a lithium salt, and an organic solvent, a mixture of a lithium salt and an organic solvent, a mixture of an ionic liquid and an organic solvent, or a mixture of a lithium salt and an ionic liquid. The polymer used in the polymer gel electrolyte may be selected from polymers used in a solid polymer electrolyte. The organic solvent may be selected from organic solvents used in a liquid electrolyte. The lithium salt may be selected from lithium salts used in a polymer solid electrolyte. The ionic liquid may refer to a salt in a liquid state at room temperature or a room-temperature molten salt that has a melting point at room temperature or less and consists of only ions. The ionic liquid may include, for example, at least one selected from compounds including a) one cation selected from an ammonium-based cation, a pyrrolidinium-based cation, pyridinium-based cation, a pyrimidinium-based cation, an imidazolium-based cation, a piperidinium-based cation, a pyrazolium-based cation, an oxazolium-based cation, a pyridazinium-base cation, a phosphonium-based cation, a sulfonium-based cation, a triazole-based cation, and a mixture thereof, and b) at least one anion selected from BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br⁻, I⁻, SO₄²⁻, CF₃SO₃⁻, (FSO₂)₂N⁻, (C₂F₅SO₂)₂N⁻, (C₂F₅SO₂)(CF₃SO₂)N⁻, and (CF₃SO₂)₂N⁻. The polymer solid electrolyte may be impregnated, for example, in a liquid electrolyte in a secondary battery to form a polymer gel electrolyte. The polymer gel electrolyte may further include inorganic particles. The polymer included in the polymer gel electrolyte may be, for example, a compound including 10 or more, 20 or more, 50 or more, or 100 or more repeating units. A weight average molecular weight of the polymer included in the polymer gel electrolyte may be, for example, 500 Daltons or more, 1,000 Daltons or more, 10,000 Daltons or more, 100,000 Daltons or more, or 1,000,000 Daltons or more.

The solid electrolyte layer 30 may be impermeable to lithium polysulfide. In some embodiments, a side reaction between lithium polysulfide, which generates during charging/discharging of a sulfide-based cathode active material, and the anode layer 20, may be prevented. In some embodiments, the cycle characteristics of the all-solid secondary battery 1 including the solid electrolyte layer 30 may be improved.

### [Solid electrolyte layer: binder]

The solid electrolyte layer 30 may include, for example, a binder. The binder included in the solid electrolyte layer 30 may be, for example, SBR, polytetrafluoroethylene, polyvinylidene fluoride, PE, or the like but is limited thereto. Any material used as a binder in the art may be used. The binder of the solid electrolyte layer 30 may be the same as or different from the binder included in the cathode active material layer 12 and the first anode active material layer 22. The binder may be omitted.

A content of the binder included in the solid electrolyte layer 30 may be in a range of about 0.1 wt% to about 10 wt%, about 0.1 wt% to about 5 wt%, about 0.1 wt% to about 3 wt%, about 0.1 wt% to about 1 wt%, about 0 wt% to about 0.5 wt%, or about 0 wt% to about 0.1 wt% with respect to the total weight of the solid electrolyte layer 30.

The present inventive concept will be described in more detail through the following Examples and Comparative Examples. However, Examples are for illustrative purposes only, and the scope of the present inventive concept is not limited by Examples.

### Preparation Example 1: Li₂S-LiI-AlI₃-CNF composite

### (First stage)

LiI and AlI₃ were mixed at a molar ratio of 1:1 to prepare a first mixture.

Li₂S and the first mixture were mixed at a weight ratio of 40:20 to prepare a second mixture. The second mixture was mechanically milled by using a ball mill to prepare a Li₂S-LiI-AlI₃ composite. Milling conditions included a temperature of 25 °C, a speed of 600 rpm, and milling time of 10 hours. Milling energy applied to a sample during milling was 28 G.

### (Second stage)

The Li₂S-LiI-AlI₃ composite and CNFs were mixed at a weight ratio of 60:10 to prepare a third mixture. The third mixture was mechanically milled by using a ball mill to prepare a Li₂S-LiI-AlI₃-CNF composite. Milling conditions included a temperature of 25 °C, a speed of 600 rpm, and milling time of 10 hours. Milling energy applied to a sample during milling was 28 G. The Li₂S-LiI-AlI₃-CNF composite was used as a sulfide-based cathode active material.

### Reference Preparation Example 1: Mixture of Li₂S, Lil, AlI₃, and CNFs

LiI and AlI₃ were mixed at a molar ratio of 1:1 to prepare a first mixture.

Li₂S and the first mixture were mixed at a weight ratio of 40:20, and a mixture of Li₂S, LiI, and AlI₃, and CNFs were additionally mixed at a weight ratio of 60:10 to be used as a sulfide-based cathode active material.

### Example 1: Mono-cell all-solid secondary battery, sulfide-based cathode active material (Li₂S-CNF composite), and first inactive member having flame retardancy

### (Preparation of anode layer)

A 10 µm-thick SUS foil was prepared as an anode current collector. In other embodiments, CB having a primary particle diameter of about 30 nm and silver (Ag) particles having an average particle diameter of about 60 nm were prepared as anode active materials.

4g of a mixed powder in which CB and silver (Ag) particles were mixed in a weight ratio of 3:1 was introduced into a container, and 4 g of an N-methyl-2-pyrrolidone (NMP) solution including 7 wt% of a PVDF binder (# 9300 manufactured by Kureha Corporation) was added thereto, thereby preparing a mixed solution. Next, while NMP was little by little added to the mixed solution, the mixed solution was stirred, thereby preparing slurry. The prepared slurry was applied on a SUS sheet using a bar coater and dried in air at a temperature of 80 °C for 10 minutes. Thus, an obtained stack was vacuum-dried at a temperature of 40 °C for 10 hours. The dried stack was pressed through a cold roll press at a pressure of 5 tonf/cm² and a speed of 5 m/sec to flatten a surface of a first anode active material layer of the stack. An anode layer was prepared through such a process. A thickness of a first anode active material layer included in the anode layer was about 15 µm. An area of the first anode active material layer was the same as an area of an anode current collector. Initial charge capacity of the anode layer was measured by using the above-described half-cell. Initial charge capacity of a first anode material layer was 2.3 mAh.

### (Preparation of cathode layer)

A Li₂S-CNF composite was prepared as a cathode active material. The Li₂S-CNF composite was prepared according to a method disclosed in Electrochimica Acta, 230 (2017), pp. 279-284, except that a vapor grown carbon fiber (VGCF) was changed into CNFs. Li₆PS₅Cl (D50=3.0 um, crystalline) which was an argyrodite-type crystal was prepared as a solid electrolyte. KB was prepared as a conductive agent. Such materials were mixed such that a weight ratio of the cathode active material, the solid electrolyte, and the conductive agent was 40:50:10, thereby preparing a cathode mixture. The cathode mixture was obtained through dry mixing using a ball mill. The cathode mixture obtained through the ball milling formed an ion-conductive and electron-conductive network.

The cathode mixture was disposed on one side of a cathode current collector consisting of an aluminium foil or SUS having one side coated with carbon and was plate-pressed at a pressure of 200 MPa for 10 minutes, thereby preparing a cathode layer. A thickness of the cathode layer was about 120 µm. A thickness of a cathode active material layer was about 100 µm, and a thickness of the aluminium foil coated with carbon was about 20 µm. An area of the cathode active material layer was the same as an area of the cathode current collector.

Initial charge capacity of the cathode layer was measured by using the above-described half-cell. Initial charge capacity of a cathode active material layer was 25 mAh.

In Example 1, a ratio (B/A) of an initial charge capacity (B) of the first anode active material layer to initial charge capacity (A) of a cathode active material layer was 0.09. The initial charge capacity of the cathode active material layer was determined by charging from a 1^{st} OCV up to a voltage of 2.8 V vs. Li/Li⁺. The initial charge capacity of the first anode active material layer was determined by charging from a 2^{nd} OCV up to a voltage of 0.01 V vs. Li/Li⁺. In each of Examples 2 to 8 and Comparative Example 1, the ratio (B/A) of the initial charge capacity (B) of the first anode active material layer to the initial charge capacity (A) of the cathode active material layer measured under the same conditions as in Example 1 was in a range of 0.07 to 0.09. A double-sided anode was used in Example 7 and Example 8, and thus half of the initial charge capacity of the cathode layer was used to calculate the ratio (B/A).

### (Preparation of solid electrolyte layer)

A mixture was prepared by adding 1.5 parts by weight of an acrylic-based binder with respect to 98.5 parts by weight of a solid electrolyte to a Li₆PS₅Cl solid electrolyte (D50=3.0 µm, crystalline) which was an argyrodite-type crystal. Octyl acetate was added to the prepared mixture and stirred to prepare slurry. The prepared slurry was applied on a 15 µm-thick nonwoven fabric placed on a 75 µm-thick PET substrate using a bar coater and was dried in air at a temperature 80 °C for 10 minutes, thereby obtaining a stack. The obtained stack was vacuum-dried at a temperature of 80 °C for 2 hours. A solid electrolyte layer was prepared through such a process.

### (Flame retardant inactive member)

Slurry, which was a mixture of a pulp fiber (cellulose fiber), a glass fiber, aluminium hydroxide (Al(OH)₃), an acrylic-based binder, and a solvent, was shaped into a gasket form, and the solvent was removed to prepare a flame retardant inactive member.

A weight ratio of the pulp fiber (cellulose fiber), the glass fiber, the aluminium hydroxide (Al(OH)₃), and the acrylic-based binder was 20:8:70:2. A thickness of the flame retardant inactive member was about 120 µm.

Before the prepared flame retardant inactive member was disposed on the solid electrolyte layer, vacuum heat treatment was performed thereon at a temperature of 80 °C for 5 hours to remove moisture or the like from the flame retardant inactive member.

### (Manufacturing of all-solid secondary battery)

Referring to FIG. 1, the solid electrolyte layer was disposed on the anode layer such that the first anode active material layer was in contact with the solid electrolyte layer, and the cathode layer was disposed on the solid electrolyte layer. A gasket, which surrounded the cathode layer and was in contact with the solid electrolyte layer, was disposed around the cathode layer to prepare a stack. A thickness of the gasket was about 120 µm. The flame retardant inactive member was used as the gasket. The gasket was disposed in contact with a side of the cathode layer and the solid electrolyte layer. The cathode layer was disposed at a central portion of the solid electrolyte layer, and the gasket was disposed to surround the cathode layer and extend to an end portion of the solid electrolyte layer. An area of the cathode layer was about 90% of an area of the solid electrolyte layer, and the gasket was disposed in the entirety of the remaining area of 10% of the solid electrolyte layer on which the cathode layer was not disposed.

The prepared stack was plate-pressed at a temperature 85 °C and a pressure of 500 MPa for 30 min. The solid electrolyte layer was sintered through such press treatment, and thus battery characteristics were improved. A thickness of the sintered solid electrolyte layer was about 45 µm. A density of the Li₆PS₅Cl solid electrolyte, which was the argyrodite-type crystal and was included in the sintered solid electrolyte layer, was 1.6 g/cc. The area of the solid electrolyte layer was the same as an area of the anode layer.

The pressed stack was introduced into a pouch and vacuum-sealed to manufacture an all-solid secondary battery. Portions of the cathode current collector and the anode current collector extended to the outside of the sealed all-solid secondary battery and were used as a cathode layer terminal and an anode layer terminal.

### Example 2: Sulfide-based cathode active material (Li₂S-CNF composite), first inactive member having flame retardancy, and second inactive member having conductivity and flame retardancy

An all-solid secondary battery was manufactured in the same manner as in Example 1, except that, before a pressed stack was introduced into a pouch, a conductive flame retardant member, which was in the form of a sheet having the same area and shape as the stack, was additionally disposed on an anode current collector of the pressed stack and was vacuum-sealed to manufacture the all-solid secondary battery. A conductive flame retardant inactive member sheet was prepared through the following method. The conductive flame retardant inactive member sheet may serve as an elastic sheet.

### (Conductive flame retardant inactive member)

Slurry, which was a mixture of a pulp fiber (cellulose fiber), a glass fiber, aluminium hydroxide (Al(OH)₃), an acrylic-based binder, a conductive material (Denka black), and a solvent, was formed into a sheet form and then dried to prepare a flame retardant inactive member. A weight ratio of the pulp fiber (cellulose fiber), the glass fiber, the aluminium hydroxide (Al(OH)₃), the acrylic-based binder, and the conductive material was 20:8:50:2:20. A thickness of the flame retardant inactive member was about 120 µm. Before the prepared flame retardant inactive member was disposed on the anode current collector, vacuum heat treatment was performed thereon at a temperature of 80 °C for 5 hours to remove moisture or the like from the flame retardant inactive member.

### Example 3: Sulfide-based cathode active material (Li₂S-CNF composite) and first inactive member having non-flame retardancy

An all-solid secondary battery was manufactured in the same manner as in Example 1, except that a flame retardant inactive member was changed into a non-flame retardant inactive member.

The non-flame retardant inactive member included a pulp fiber and an acrylic-based binder in a weight ratio of 98:2 and did not include a glass fiber and Al(OH)₃. A thickness of the non-flame retardant inactive member was about 120 µm.

### Example 4: Sulfide-based cathode active material (Li₂S-C-Li₆PS₅Cl composite) and first inactive member having flame retardancy

An all-solid secondary battery was manufactured in the same manner as in Example 1, except that a Li₂S-C-Li₆PS₅Cl composite was used as a cathode active material instead of a Li₂S-CNF composite.

The Li₂S-C-Li₆PS₅Cl composite was prepared according to a method disclosed in Nano Lett. 2016, 16, 7, pp 4521-4527.

### Example 5: Sulfide-based cathode active material (Li₂S-CNF composite), first anode active material layer (Ag-supported carbon black), flame retardant first inactive member, flame retardant second inactive member

An all-solid secondary battery was manufactured in the same manner as in Example 2, except that silver particle-supported CB below was used as an anode active material instead of a mixture of carbon black and silver particles.

### (Preparation of silver particle-supported CB)

CB was dispersed in a 1.0 M sulfuric acid solution and stirred for 2 hours and then filtered and dried to prepare acid-treated CB.

10 g of the acid-treated CB was added to a mixed solvent of 1,500 g of distilled water, 1,500 g of ethanol, and 30 g of glycerol and stirred, and then 2 g of AgNO₃ was added and stirred to prepare a mixed solution. A particle diameter of the CB was 80 nm. A reducing agent was added to the mixed solution, and silver ions were reduced and supported on the CB. The CB on which silver-containing particles were supported was filtered, cleaned, and dried to prepare a composite anode active material. As a result of scanning electron microscopy and X-ray photoelectron spectroscopy (XPS) measurement, it was confirmed that a plurality of silver-containing particles were supported on CB particles. The silver-containing particles included silver particles, silver oxide (AgO) particles, and composite particles of silver (Ag) and silver oxide (AgO). A content of the silver-containing particles included in the composite anode active material was 5 wt%. An average particle diameter of the silver particles was 10 nm.

### Example 6: Sulfide-based cathode active material (Li₂S-C-LiI composite), flame retardant first inactive member

An all-solid secondary battery was manufactured in the same manner as in Example 1, except that a Li₂S-C-LiI composite was used as a cathode active material instead of a Li₂S-CNF composite.

The Li₂S-C-LiI composite was prepared according to a method disclosed in Nano Lett. 2016, 16, 7, pp 4521-4527, except that Li₆PS₅Cl was changed into Lil.

### Comparative Example 1: Sulfide-based cathode active material and non-use of inactive member (free)

An all-solid secondary battery was manufactured in the same manner as in Example 1, except that a flame retardant inactive member (for example, a gasket) was not used if the all-solid secondary battery was manufactured.

### Comparative Example 2: Oxide-based cathode active material and first inactive member having flame retardancy

An all-solid secondary battery was manufactured in the same manner as in Example 1, except that a cathode including lithium transition metal oxide was used instead of a cathode including a Li₂S cathode active material.

In Comparative Example 2, a ratio (B/A) of an initial charge capacity (B) of a first anode active material layer to initial charge capacity (A) of a cathode active material layer was 0.09. The initial charge capacity of the cathode active material layer was determined by charging from a 1^{st} OCV up to a voltage of 4.25 V vs. Li/Li⁺. The initial charge capacity of the first anode active material layer was determined by charging from a 2^{nd} OCV up to a voltage of 0.01 V vs. Li/Li⁺.

The cathode including the lithium transition metal oxide was provided through the following method.

### (Preparation of cathode layer)

LiNi_{0.8}Co_{0.15}Al_{0.05}O₂ (NCA) coated with Li₂O-ZrO₂ (LZO) was prepared as a cathode active material. The cathode active material coated with LZO was prepared according to a method disclosed in Korean Patent Publication No. 10-2016-0064942. Li₆PS₅Cl (D50=0.5 um, crystalline) which was an argyrodite-type crystal was prepared as a solid electrolyte. A polytetrafluoroethylene (PTFE) binder (Teflon binder manufactured by DuPont) was prepared as a binder. CNFs were prepared as a conductive agent. A mixture, in which such materials were mixed into a xylene solvent such that a weight ratio of the cathode active material, the solid electrolyte, the conductive agent, and the binder was 84:11.5:3:1.5, was shaped into a sheet form and then dried at a temperature of 40 °C for 8 hours to prepare a cathode sheet. The cathode sheet was disposed on one side of a cathode current collector consisting of an aluminium foil having one side coated with carbon and was plate-pressed at a pressure of 200 MPa for 10 minutes, thereby preparing a cathode layer. A thickness of the cathode layer was about 120 µm. A thickness of a cathode active material layer was about 100 µm, and a thickness of the aluminium foil coated with carbon was about 20 µm. An area of the cathode active material layer was the same as an area of the cathode current collector.

### Example 7: One bi-cell all-solid secondary battery, sulfide-based cathode active material (Li₂S-CNF composite), and first inactive member having flame retardancy

### (Manufacturing of bi-cell all-solid secondary battery)

A cathode layer was prepared in the same manner as in Example 1, except that a cathode active material layer was prepared to be disposed on two sides of a cathode current collector.

An entire thickness of the cathode layer was about 220 µm. A thickness of the cathode active material layer was about 100 µm, and a thickness of an aluminium foil coated with carbon was about 20 µm.

Two anode layers, two solid electrolyte layers, and two flame retardant inactive members were prepared in the same manner as in Example 1.

Referring to FIG. 3, the solid electrolyte layer was disposed on the anode layer such that a first anode active material layer was in contact with the solid electrolyte layer, and the cathode layer was disposed on the solid electrolyte layer. The cathode layer had a structure in which the cathode active material layer was disposed on each of two sides of the cathode current collector. A gasket was disposed around the cathode layer to surround the cathode layer and be in contact with the solid electrolyte layer. A thickness of the gasket was about 220 µm. The gasket may have, for example, a structure in which two gaskets having a thickness of 110 µm are stacked or one gasket having a thickness of 220 µm is provided. The flame retardant inactive member was used as the gasket.

The gasket was disposed in contact with a side of the cathode layer and the solid electrolyte layer. The cathode layer was disposed at a central portion of the solid electrolyte layer, and the gasket was disposed to surround the cathode layer and extend to an end portion of the solid electrolyte layer. An area of the cathode layer was about 90% of an area of the solid electrolyte layer, and the gasket was disposed in the entirety of the remaining area of 10% of the solid electrolyte layer on which the cathode layer was not disposed. The solid electrolyte layer was disposed on the cathode layer and the gasket, and the anode layer was disposed on the solid electrolyte layer, thereby preparing a stack.

The prepared stack was plate-pressed at a temperature 85 °C and a pressure of 500 MPa for 30 min. The solid electrolyte layer was sintered through such press treatment, and battery characteristics were improved. A thickness of the one sintered solid electrolyte layer was about 45 µm. A density of a Li₆PS₅Cl solid electrolyte, which was an argyrodite-type crystal and was included in the sintered solid electrolyte layer, was 1.6 g/cc. The area of the solid electrolyte layer was the same as an area of the anode layer.

The pressed stack was introduced into a pouch and vacuum-sealed to manufacture an all-solid secondary battery. Portions of the cathode current collector and the anode current collector extended to the outside of the sealed battery and were used as a cathode layer terminal and an anode layer terminal.

### Example 8: One bi-cell all-solid secondary battery, sulfide-based cathode active material (Li₂S-CNF composite), first inactive member having flame retardancy, and second inactive member having conductivity and flame retardancy

An all-solid secondary battery was manufactured in the same manner as in Example 7, except that, before a pressed stack was introduced into a pouch, a conductive flame retardant inactive member, which was in the form of a sheet having the same area and shape as the stack, was additionally disposed on one side of the pressed stack and the other side opposite to the one side and was vacuum-sealed to manufacture the all-solid secondary battery. The conductive flame retardant inactive member was prepared in the same manner as in Example 2.

### Example 9: Mono-cell all-solid secondary battery, sulfide-based cathode active material (Li₂S-LiI-AlI₃-CNF composite), flame retardant first inactive member

An all-solid secondary battery was manufactured in the same manner as in Example 1, except that the Li₂S-LiI-AlI₃-CNF composite prepared in Preparation Example 1 was used as a cathode active material instead of a Li₂S-CNF composite.

### Reference Example 1: Mono-cell all-solid secondary battery, sulfide-based cathode active material (Li₂S-LiI-AlI₃-CNF mixture), flame retardant first inactive member

An all-solid secondary battery was manufactured in the same manner as in Example 1, except that the simple mixture of Li₂S, LiI, AlI₃, and CNFs prepared in Reference Preparation Example 1 was used as a cathode active material instead of a Li₂S-CNF composite.

### Evaluation Example 1: Calculation of volume change rate during charging of all-solid secondary battery

From an initial first volume of a first all-solid secondary battery having a structure of [Al current collector (10 µm)/LiNi_{0.8}Co_{0.15}Al_{0.05}O₂ (NCA) cathode active material layer (100 µm)/Li₆PS₅Cl solid electrolyte layer (32 µm)/first anode active material layer (7 µm)/SUS current collector (10 µm)] and a second volume after charging of the first all-solid secondary battery in which a lithium metal layer having a thickness of 30 µm was precipitated between a first anode active material layer and a SUS current collector through charging, a change in volume of the first all-solid secondary battery during charging was calculated and shown in Table 1 below. It was assumed that there was no change in thickness of an NCA cathode active material layer before and after charging.

From an initial first volume of a second all-solid secondary battery having a structure of [Al current collector (10 µm)/Li₂S (60 wt%)-carbon (40 wt%) cathode active material layer (50 µm)/Li₆PS₅Cl solid electrolyte layer (32 µm)/first anode active material layer (7µm)/SUS current collector (10 µm)] and a second volume after charging of the second all-solid secondary battery in which a lithium metal layer having a thickness of 30 µm was precipitated between a first anode active material layer and a SUS current collector through charging, a change in volume of the second all-solid secondary battery during charging was calculated and shown in Table 1 below. It was assumed that a thickness of Li₂S (60 wt%)-carbon (40 wt%) after charging was decreased from 50 µm to 35 µm, for example, by 15 µm. It was assumed that all lithium included in Li₂S moved to an anode. It was assumed that a cathode active material layer of the second all-solid secondary battery consisted of only Li₂S and carbon. It was assumed that a cathode active material layer of the first all-solid secondary battery consisted of NCA.

**[Table 1]**

| | Initial cell thickness [µm] | Change in thickness [µm] | Volumetric expansion ratio [%] |
|---|---|---|---|
| First all-solid secondary battery (NCA cathode) | 159 | 30 | 18.9 |
| Second all-solid secondary battery (Li₂S cathode) | 109 | 15 | 13.9 |

As shown in Table 1, in the second all-solid secondary battery including the cathode active material layer that included Li₂S, a volume of an anode layer was increased due to the precipitation of the lithium metal layer, but a volume of the cathode active material layer was decreased to suppress an increase in overall volume of the second all-solid secondary battery. In other embodiments, in the first all-solid secondary battery including the cathode active material layer that included lithium transition metal oxide, a change in volume of the cathode active material layer was insignificant, and thus an overall volume of the first all-solid secondary battery was considerably increased due to the precipitation of the lithium metal layer.

In some embodiments, it was confirmed that, in the second all-solid secondary battery, a change in volume occurring during charging/discharging of the second all-solid secondary battery was decreased in comparison with a change in volume occurring during charging/discharging of the first all-solid secondary battery, thereby effectively preventing deterioration due to cracks or the like of the second all-solid secondary battery.

### Evaluation Example 2: XRD analysis and SEM analysis

By using Cu Kα radiation, an X-ray diffraction (XRD) spectrum was measured on bare Li₂S used in Preparation Example 1, pulverized Li₂S, and the Li₂S-LiI- AlI₃-CNF composite prepared in Preparation Example 1. Measurement results are shown in Table 2 below. A Li₂S crystallite size and a lattice constant were derived from a first peak for a (111) crystal plane of Li₂S that appears in the XRD spectrum.

The pulverized Li₂S was prepared through milling under the same conditions, except that a 40:20 weight ratio mixture of Li₂S and the first mixture (1:1 molar ratio mixture of LiI and AlI₃) in the first stage of Example 1 was changed to 50 parts by weight of Li₂S. A second stage was not performed.

By using a PSA using a laser and a SEM, for the bare Li₂S used in Preparation Example 1, the pulverized Li₂S, and the Li₂S-LiI-AlI₃-CNF composite prepared in Preparation Example 1, a particle size (that is, a D50 particle size) of a composite and a Li₂S particle size of the composite were measured. Measurement results are shown in Table 2 below.

**[Table 2]**

| | Li₂S crystallite size [nm] | Li₂S particle size [µm] |
|---|---|---|
| Bare Li₂S | 64.67 | 8 |
| Pulverized Li₂S | 15.42 | - |
| Preparation Example 1 (Li₂S-LiI-AlI₃-CNF composite) | Less than 10 | Less than 1 |

As shown in Table 2, the Li₂S particle size and the Li₂S crystallite size in the Li₂S-LiI-AlI₃-CNF composite of Preparation Example 1 were considerably reduced as compared with the bare Li₂S.

Although not shown in Table 2, a Li₂S lattice constant of the Li₂S-LiI-AlI₃-CNF composite of Preparation Example 1 was larger than that of the bare Li₂S.

The increase in the Li₂S lattice constant of the Li₂S-LiI-AlI₃-CNF composite as compared with the lattice constant of the bare Li₂S was determined to be due to LiI and/or AlI₃ being dissolved in a Li₂S crystal. In some embodiments, it was confirmed that Li₂S, Lil, and/or AlI₃ formed a solid solution in the Li₂S-LiI-AlI₃-CNF composite. Although not shown in Table 2, a particle size of the Li₂S-LiI-AlI₃-CNF composite prepared in Preparation Example 1 was about 5 µm.

### Evaluation Example 3: Charge/discharge test

The charge/discharge characteristics of the all-solid secondary batteries manufactured in Examples 1 to 9 and Comparative Example 1 were evaluated through the following charge/discharge test. The all-solid secondary batteries were introduced into a constant-temperature tank having a temperature of 45 °C to perform the charge/discharge test.

In a 1^{st} cycle, the all-solid secondary batteries were charged at a constant current of 0.1 C for 12.5 hours until a battery voltage reached a range of 2.5 V to 2.8 V. Subsequently, the all-solid secondary batteries were discharged at a constant current of 0.1 C for 12.5 hours until the battery voltage reached 0.5 V.

In a 2^{nd} cycle, the all-solid secondary batteries were charged at a constant current of 0.33 C for 12.5 hours until the battery voltage reached a range of 2.5 V to 2.8 V. Subsequently, the all-solid secondary batteries were discharged at a constant current of 0.33 C for 12.5 hours until the battery voltage reached 0.5 V.

In a 3^{rd} cycle, the all-solid secondary batteries were charged at a constant current of 1.0 C for 12.5 hours until the battery voltage reached a range of 2.5 V to 2.8 V. Subsequently, the all-solid secondary batteries were discharged at a constant current of 1.0 C for 12.5 hours until the battery voltage reached 0.5 V.

The charge/discharge characteristics of the all-solid secondary battery manufactured in Comparative Example 2 were evaluated through the following charge/discharge test. The all-solid secondary battery was introduced into a constant-temperature tank having a temperature of 45 °C to perform the charge/discharge test.

In a 1^{st} cycle, the all-solid secondary battery was charged at a constant current of 0.1 C for 12.5 hours until a battery voltage was reached a range of 3.9 V to 4.25 V. Subsequently, the all-solid secondary battery was discharged at a constant current of 0.1 C for 12.5 hours until the battery voltage reached 2.5 V.

In a 2^{nd} cycle, the all-solid secondary battery was charged at a constant current of 0.33 C for 12.5 hours until the battery voltage reached a range of 3.9 V to 4.25 V. Subsequently, the all-solid secondary battery was discharged at a constant current of 0.33 C for 12.5 hours until the battery voltage reached 2.5 V.

In a 3^{rd} cycle, the all-solid secondary battery was charged at a constant current of 1.0 C for 12.5 hours until the battery voltage was reached a range of 3.9 V to 4.25 V. Subsequently, the all-solid secondary battery was discharged at a constant current of 1.0 C for 12.5 hours until the battery voltage reached 2.5 V.

In a charging/discharging process up to the 3^{rd} cycle, whether a short circuit occurs, initial discharge capacity, and high-rate characteristics are shown in Table 3 below.

If a short circuit occurs before the 1^{st} cycle is completed, whether the short circuit occurs is denoted by o, if a short circuit occurs in the 2^{nd} cycle, whether the short circuit occurs is denoted by △, and if a short circuit does not occur until a time point at which the 3^{rd} cycle is completed, whether the short circuit occurs is denoted by ×.

**[Table 3]**

| | Short circuit |
|---|---|
| Example 1 (mono-cell/Li₂S-CNF composite/flame retardant cathode gasket) | × |
| Example 2 (mono-cell/Li₂S-CNF composite/flame retardant cathode gasket/Ag+CB mixture/anode sheet) | × |
| Example 3 (mono-cell/Li₂S-CNF composite/non-flame retardant cathode gasket) | × |
| Example 4 (mono-cell/Li₂S-C-Li₆PS₅Cl composite/flame retardant cathode gasket) | × |
| Example 5 (mono-cell/Li₂S-C-Composite/flame retardant cathode gasket/Ag-supported CB/anode sheet) | × |
| Example 6 (mono-cell/Li₂S-C-LiI composite/flame retardant cathode gasket) | × |
| Example 7 (bi-cell/Li₂S-CNF composite/flame retardant cathode gasket) | × |
| Example 8 (bi-cell/Li₂S-CNF composite/flame retardant cathode gasket/anode sheet) | × |
| Example 9 (mono-cell/Li₂S-LiI-AlI₃-CNF composite/flame retardant cathode gasket) | × |
| Comparative Example 1 (mono-cell/Li₂S-CNF composite/-) | ○ |
| Comparative Example 2 (mono-cell/NCA/flame retardant cathode gasket) | × |

As shown in Table 3, the all-solid secondary batteries of Examples 1 to 9 exhibited improved cycle characteristics as compared with the all-solid secondary battery of Comparative Example 1.

### Evaluation Example 4: High-temperature lifespan characteristics test

The charge/discharge characteristics of the all-solid secondary batteries manufactured in Examples 1 to 9 and Reference Example 1 were evaluated through the following charge/discharge test. The all-solid secondary batteries were introduced into a constant-temperature tank having a temperature of 45 °C to perform the charge/discharge test.

In a 1^{st} cycle, the all-solid secondary batteries were charged at a constant current of 0.6 mA/cm² for 12.5 hours until a battery voltage reached a range of 2.5 V to 2.8 V. Subsequently, the all-solid secondary batteries were discharged at a constant current of 0.6 mA/cm² for 12.5 hours until the battery voltage reached 0.5 V.

The charge/discharge characteristics of the all-solid secondary battery manufactured in Comparative Example 2 were evaluated through the following charge/discharge test. The all-solid secondary battery was introduced into a constant-temperature tank having a temperature of 45 °C to perform the charge/discharge test.

In a 1^{st} cycle, the all-solid secondary battery was charged at a constant current of 0.6 mA/cm² for 12.5 hours until a battery voltage reached a range of 3.9 V to 4.25 V. Subsequently, the all-solid secondary battery was discharged at a constant current of 0.6 mA/cm² for 12.5 hours until the battery voltage reached 2.5 V.

Discharge capacity of the 1^{st} cycle was taken as standard capacity. From the 2^{nd} cycle, charging and discharging were performed up to 1,100 cycles under the same conditions as the 1^{st} cycle. Measurement results are shown in Table 4 below.

As the number of cycles required for discharge capacity to decrease to 95% of the standard capacity after the 2^{nd} cycle increased, it was regarded to have excellent lifespan characteristics.

In the all-solid secondary battery of Comparative Example 1, a short circuit occurred before the 1^{st} cycle was completed, and thus lifespan characteristics could not be measured.

**[Table 4]**

| | Number of cycles [Times] |
|---|---|
| Example 1 (mono-cell/Li₂S-CNF composite/flame retardant cathode gasket) | 301 |
| Example 2 (mono-cell/Li₂S-CNF composite/flame retardant cathode gasket/Ag+CB mixture/anode sheet) | 415 |
| Example 3 (mono-cell/Li₂S-CNF composite/non-flame retardant cathode gasket) | 220 |
| Example 4 (mono-cell/Li₂S-C-Li₆PS₅Cl composite/flame retardant cathode gasket) | 302 |
| Example 5 (mono-cell/Li₂S-C-Composite/flame retardant cathode gasket/Ag-supported CB/anode sheet) | 580 |
| Example 6 (mono-cell/Li₂S-C-LiI composite/flame retardant cathode gasket) | 820 |
| Example 7 (bi-cell/Li₂S-CNF composite/flame retardant cathode gasket) | 450 |
| Example 8 (bi-cell/Li₂S-CNF composite/flame retardant cathode gasket/anode sheet) | 510 |
| Example 9 (mono-cell/Li₂S-LiI-AlI₃-CNF composite/flame retardant cathode gasket | 1,050 |
| Comparative Example 1 (mono-cell/Li₂S-CNF composite/-) | Unmeasurable |
| Comparative Example 2 (mono-cell/NCA/flame retardant cathode gasket) | 200 |

As shown in Table 4, the lifespan characteristics of the all-solid secondary batteries of Examples 1 to 9 were improved as compared with the all-solid secondary battery of Comparative Example 2.

The all-solid secondary battery of Example 6 included the Li₂S-C-LiI composite as a cathode active material, and thus the lifespan characteristics thereof were further improved as compared with Example 1 including the Li₂S-C composite and Example 4 including the Li₂S-C-Li₆PS₅Cl composite.

It was determined that, due to a decrease in change in volume during charging/discharging, the lifespan characteristics of the all-solid secondary batteries of Examples 1 to 6 including Li₂S were improved as compared with the all-solid secondary battery of Comparative Example 2 including an oxide-based cathode active material.

It was determined that the all-solid secondary batteries of Example 7 and Example 8 had a bi-cell structure in which components were symmetrically disposed, and thus a change in volume during charging/discharging was effectively decreased, whereby the all-solid secondary batteries of Examples 7 and 8 had improved lifespan characteristics as compared with the all-solid secondary batteries of Examples 1 to 4 having a mono-cell structure.

It was determined that the all-solid secondary batteries of Examples 1, 2, and 4 included a flame retardant inactive member and thus had improved lifespan characteristics as compared with Example 3 including a non-flame retardant inactive member.

It was determined that a second inactive member was additionally disposed on an anode current collector to effectively relieve stress of the anode layer on which a change in volume was concentrated, and thus the all-solid secondary battery of Example 8 had improved lifespan characteristics as compared with the all-solid secondary battery of Example 7. It was determined that the all-solid secondary battery of Example 2 had improved lifespan characteristics as compared with Examples 1, 3, and 4 for the same reason. By using silver particle-supported carbon, the all-solid secondary battery of Example 5 was determined to have improved lifespan characteristics as compared with Example 2 including the simple mixture of silver particles and carbon particles.

Although not shown in Table 4, the lifespan characteristics of the all-solid secondary battery of Reference Example 1 were deteriorated as compared with the all-solid secondary battery of Example 9.

As described above, the all-solid secondary battery according to the present embodiment may be applied to various portable devices or vehicles.

While embodiments have been described in detail with reference to the accompanying drawings, the present inventive concept is not limited to the embodiments. It is obvious to those skilled in the art to which the present inventive concept belongs that various changes and modifications are conceivable within the scope of the technical idea described in the claims, and those are understood as naturally belonging to the technical scope of the present inventive concept.

According to one aspect, according to an all-solid secondary battery having a novel structure, there may be provided an all-solid secondary battery in which a short circuit is suppressed and cycle characteristics are improved.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the disclosure as defined by the following claims.

## Claims

1. An all-solid secondary battery comprising:
a cathode layer;
an anode layer;
a solid electrolyte layer disposed between the cathode layer and the anode layer; and
a first inactive member disposed on a side of the cathode layer,
wherein the cathode layer comprises a cathode current collector and a cathode active material layer disposed on one side or two sides of the cathode current collector,
the cathode active material layer comprises a lithium-containing sulfide-based cathode active material, and
the lithium-containing sulfide-based cathode active material comprises Li₂S, a Li₂S-containing composite, or a combination thereof,
the anode layer comprises an anode current collector and a first anode active material layer disposed on one side of the anode current collector,
a ratio (B/A) of an initial charge capacity (B) of the first anode active material layer to initial charge capacity (A) of the cathode active material layer is in a range of about 0.005 to about 0.45,
the initial charge capacity of the cathode active material layer is determined by charging from a 1^{st} open circuit voltage up to a maximum charging voltage for Li/Li⁺, and
the initial charge capacity of the anode active material layer is determined by charging from a 2^{nd} open circuit voltage up to a voltage of about 0.01 V for Li/Li⁺.

2. The all-solid secondary battery as claimed in claim 1, wherein the Li₂S-containing composite comprises a composite of Li₂S and a conductive material, a composite of Li₂S, a solid electrolyte, and a conductive material, a composite of Li₂S and a solid electrolyte, a composite of Li₂S, a lithium salt, and a conductive material, a composite of Li₂S and a lithium salt, a composite of Li₂S and a metal carbide, a composite of Li₂S, a metal carbide, and a conductive material, a composite of Li₂S and a metal nitride, a composite of Li₂S, a metal nitride, and a conductive material, or a combination thereof.

3. The all-solid secondary battery as claimed in claim 1, wherein the Li₂S-containing composite comprises a composite of Li₂S and a lithium salt, a composite of Li₂S, a lithium salt, and a conductive material, a composite of Li₂S and a metal halide, a composite of Li₂S, a metal halide, and a conductive material, a composite of Li₂S, a lithium salt, and a metal halide, a composite of Li₂S, a lithium salt, a metal halide, and a conductive material, or a combination thereof,
wherein the composite of the Li₂S and the lithium salt is represented by Li₂S-LiₐX1_{b}, wherein 1≤a≤5 and 1≤b≤5,
the composite of the Li₂S, the lithium salt, and the conductive material is represented by Li₂S-LiₐX1_{b}-C, wherein 1≤a≤5 and 1≤b≤5,
the composite of the Li₂S and the metal halide is represented by Li₂S-M_{c}X2_{d}, wherein 1≤c≤5 and 1≤d≤5,
the composite of the Li₂S, the metal halide, and the conductive material is represented by Li₂S-M_{c}X2_{d}-C, wherein 1≤c≤5 and 1≤d≤5,
the composite of the Li₂S, the lithium salt, and the metal halide is represented by Li₂S-LiₐX1_{b}-M_{c}X2_{d}, wherein 1≤a≤5, 1≤b≤5, 1≤c≤5, and 1≤d≤5,
the composite of the Li₂S, the lithium salt, the metal halide, and the conductive material is represented by Li₂S-LiₐX1_{b}-M_{c}X2_{d}-C, wherein 1≤a≤5, 1≤b≤5, 1≤c≤5, 1≤d≤5, X1 is I, Br, Cl, F, H, O, Se, Te, N, P, As, Sb, Al, B, OCI, PF₆, BF₄, SbF₆, AsF₆, ClO₄, AlO₂, AlCl₄, NO₃, CO₃, BH₄, SO₄, BO₃, PO₄, NCI, NCl₂, BN₂, or a combination thereof, M is at least one metal selected from Groups 2 to 15 of the periodic table of elements, and X2 is I, Br, Cl, F, or a combination thereof.

4. The all-solid secondary battery as claimed in claim 3, wherein the Li₂S-containing composite comprises a solid solution of Li₂S and a lithium salt, a solid solution of Li₂S and a metal halide, a solid solution of Li₂S, a lithium salt, and a metal halide, or a combination thereof.

5. The all-solid secondary battery as claimed in claim 3 or claim 4, wherein the lithium salt is a binary compound or a ternary compound,
wherein the binary compound comprises Lil, LiBr, LiCI, LiF, LiH, Li₂O, Li₂Se, Li₂Te, Li₃N, Li₃P, Li₃As, Li₃Sb, Li₃Al₂, LiB₃, or a combination thereof, and
the ternary compound comprises Li₃OCl, LiPF₆, LiBF₄, LiSbF₆, LiAsF₆, LiClO₄, LiAlO₂, LiAlCl₄, LiNO₃, Li₂CO₃, LiBH₄, Li₂SO₄, Li₃BO₃, Li₃PO₄, Li₄NCl, Li₅NCl₂, Li₃BN₂, or a combination thereof.

6. The all-solid secondary battery as claimed in any one of claims 3 to 5, wherein the metal halide comprises at least one metal selected from Al, Mg, Ti, Sn, As, Sb, Nb, Sc, Zr, V, W, Mn, Fe, Co, Pd, Cu, Ag, Zn, and Se, and comprises AlF₃, AlCl₃, AlBr₃, AlI₃, MgF₂, MgCl₂, MgBr₂, MgI₂, TiF₄, TiCl₄, TiBr₄, TiI₄, SnF₄, SnCl₄, SnBr₄, SnI₄, AsF₄, AsCl₄, AsBr₄, AsI₄, SbF₄, SbCl₄, SbBr₄, SbI₄, or a combination thereof.

7. The all-solid secondary battery as claimed in claim 1, wherein the Li₂S-containing composite comprises a composite of Li₂S, a lithium salt, a metal halide, and a conductive material, and
with respect to 100 parts by weight of the composite of Li₂S, the lithium salt, the metal halide, and the conductive material, the Li₂S-containing composite comprises the Li₂S in a content of about 40 parts by weight to about 80 parts by weight, a combination of the lithium salt and the metal halide in a content of about 1 part by weight to about 40 parts by weight, and the conductive material in a content of about 1 part by weight to about 20 parts by weight,
wherein a molar ratio of the lithium salt to the metal halide is in a range of about 3:1 to about 1:3, and
a content of the Li₂S in the cathode active material layer is 40 wt% or more.

8. The all-solid secondary battery as claimed in any one of claims 1 to 7, wherein the first inactive member surrounds a side of the cathode layer and is in contact with the solid electrolyte layer,
the first inactive member extends from one side of the cathode layer to an end portion of the solid electrolyte layer along a surface of the solid electrolyte layer,
an area of the cathode layer is smaller than an area of the solid electrolyte layer in contact with the cathode layer,
the first inactive member is disposed to surround a side of the cathode layer and to compensate for a difference between the area of the cathode layer and the area of the solid electrolyte layer,
a thickness of the first inactive member is greater than a thickness of the first anode active material layer,
the thickness of the first anode active material layer is 50% or less of the thickness of the first inactive member, and
the anode current collector is free of the anode active material layer on an opposite side of the anode current collector.

9. The all-solid secondary battery as claimed in any one of claims 1 to 8, wherein the first inactive member comprises a flame retardant inactive member, and
the flame retardant inactive member comprises a matrix and a filler, optionally
wherein the matrix comprises a substrate and a reinforcement material,
the substrate comprises a first fibrous material,
the first fibrous material is an insulating material and comprises at least one selected from a pulp fiber, an insulating polymer fiber, and an ion-conductive polymer fiber,
the reinforcement material comprises a second fibrous material,
the second fibrous material is a flame retardant material and comprises at least one selected from a glass fiber and a ceramic fiber,
the filler is a moisture getter and comprises a metal hydroxide, and
the metal hydroxide comprises at least one selected from Mg(OH)₂, Fe(OH)₃, Sb(OH)₃, Sn(OH)₄, Ti(OH)₃, Zr(OH)₄, and Al(OH).

10. The all-solid secondary battery as claimed in any one of claims 1 to 9, wherein the first anode active material layer comprises an anode active material and a binder,
wherein the anode active material has a particle form and has an average particle diameter of 4 µm or less.

11. The all-solid secondary battery as claimed in claim 10, wherein:
(i) the anode active material comprises at least one selected from a carbon-based anode active material and a metal or metalloid anode active material,
wherein the carbon-based anode active material comprises amorphous carbon, crystalline carbon, porous carbon, or a combination thereof, and
the metal or metalloid anode active material comprises gold (Au), platinum (Pt), palladium (Pd), silicon (Si), silver (Ag), aluminium (Al), bismuth (Bi), tin (Sn), zinc (Zn), or a combination thereof; and/or
(ii) the anode active material comprises a mixture of first particles consisting of amorphous carbon and second particles consisting of a metal or metalloid,
wherein a content of the second particles is in a range of about 1 wt% to about 60 wt% with respect to a total weight of the mixture.

12. The all-solid secondary battery as claimed in any one of claims 1 to 11, wherein:
(i) the first anode active material layer further comprises a solid electrolyte; and/or
(ii) the anode active material comprises a carbon-based support, and a metal-based anode active material supported on the carbon-based support,
wherein the metal-based anode active material comprises a metal, a metal oxide, a composite of a metal and a metal oxide, or a combination thereof, and has a particle form and a particle diameter of about 1 nm to about 200 nm,
the carbon-based support has a particle form and has a particle diameter of about 10 nm to about 2 µm, and
the all-solid secondary battery further comprises a second anode active material layer, which, after the all-solid secondary battery is charged, is disposed between the anode current collector and the first anode active material layer,
wherein the second anode active material layer is a metal layer, and
the metal layer comprises lithium or a lithium alloy.

13. The all-solid secondary battery as claimed in any one of claims 1 to 12, further comprising a second inactive member disposed on the opposite side of the anode current collector,
wherein the second inactive member comprises a conductive flame retardant inactive member, optionally wherein a Young's modulus of the second inactive member is less than a Young's modulus of the anode current collector,
the Young's modulus of the second inactive member is 100 MPa or less,
a thickness of the second inactive member is greater than a thickness of the first anode active material layer, and
the thickness of the first anode active material layer is 50% or less of the thickness of the second inactive member.

14. The all-solid secondary battery as claimed in any one of claims 1 to 13, wherein:
(i) a volumetric expansion ratio of the all-solid secondary battery after charging is 15% or less, and
an energy density of the all-solid secondary battery is in a range of about 500 Wh/L to about 900 Wh/L or about 350 Wh/kg to about 600 Wh/kg; and/or
(ii) the solid electrolyte layer comprises an electrolyte,
wherein the electrolyte comprises a solid electrolyte, a gel electrolyte, or a combination thereof,
wherein the solid electrolyte comprises a sulfide-based solid electrolyte, an oxide-based solid electrolyte, a polymer solid electrolyte, or a combination thereof,
the gel electrolyte comprises a polymer gel electrolyte, and
the solid electrolyte layer is impermeable to lithium polysulfide.

15. The all-solid secondary battery as claimed in any one of claims 1 to 14, wherein:
(i) the sulfide-based solid electrolyte is at least one selected from Li₂S-P₂S₅, Li₂S-P₂S₅-LiX, wherein X is a halogen element, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ, wherein m and n are positive numbers and Z is at least one selected from Ge, Zn, and Ga, Li₂S-GeS₂, Li₂S-SiS₂-Li₃PO₄, Li₂S-SiS₂-LiₚMO_{q}, wherein p and q are positive numbers and M is at least one selected from P, Si, Ge, B, Al, Ga, and In, Li₇₋ₓPS₆₋ₓClₓ, wherein 0≤x≤2, Li₇₋ₓPS₆₋ₓBrₓ, wherein 0≤x≤2, and Li₇₋ₓPS₆₋ₓIₓ, wherein 0≤x≤2, and
the sulfide-based solid electrolyte is an argyrodite-type solid electrolyte including at least one selected from Li₆PS₅Cl, Li₆PS₅Br, and Li₆PS₅I, and
a density of the argyrodite-type solid electrolyte is in a range of about 1.5 g/cc to about 2.0 g/cc; and/or
(ii) at least one of the cathode current collector and the anode current collector comprises a base film and a metal layer disposed on one side or two sides of the base film,
wherein the base film comprises a polymer, the polymer comprising polyethylene terephthalate (PET), polyethylene (PE), polypropylene (PP), polybutylene terephthalate (PBT), polyimide (PI), or a combination thereof, and
the metal layer comprises indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof.
